(19) Europäisches Patentamt / European Patent Office / Office européen des brevets

(11) **EP 3 943 572 B1**

(12) **EUROPEAN PATENT SPECIFICATION**

(45) Date of publication and mention
of the grant of the patent:
**26.07.2023 Bulletin 2023/30**

(21) Application number: **19919789.8**

(22) Date of filing: **06.09.2019**

(51) International Patent Classification (IPC):
**C09K 5/06** *(2006.01)*    **F28D 20/02** *(2006.01)*

(52) Cooperative Patent Classification (CPC):
**C09K 5/066; C09K 5/06; Y02E 60/14**

(86) International application number:
**PCT/JP2019/035116**

(87) International publication number:
**WO 2020/188855 (24.09.2020 Gazette 2020/39)**

(54) **COLD-STORAGE MATERIAL COMPOSITION**

KÄLTESPEICHERMATERIALZUSAMMENSETZUNG

COMPOSITION DE MATÉRIAU DE STOCKAGE À FROID

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2019   JP 2019050569
19.03.2019   JP 2019050570**

(43) Date of publication of application:
**26.01.2022   Bulletin 2022/04**

(73) Proprietor: **Panasonic Holdings Corporation
Osaka 571-8501 (JP)**

(72) Inventors:
• **SUZUKI, Motohiro**
**Osaka-shi, Osaka 540-6207 (JP)**
• **MACHIDA, Hironobu**
**Osaka-shi, Osaka 540-6207 (JP)**

(74) Representative: **Grünecker Patent- und
Rechtsanwälte
PartG mbB
Leopoldstraße 4
80802 München (DE)**

(56) References cited:
**WO-A1-2015/079891    WO-A1-2016/002596
JP-A- 2017 179 299    JP-A- 2019 019 151**

**Description**

Technical Field

The present invention relates to a cold storage material composition.

Background Art

Cold storage material compositions are used for obtaining cooling effect in the fields of, for example, food preservation and medicine. For example, in the event of a power outage, in order to maintain the inside of a refrigerator at a low temperature, a cold storage material composition is placed in the refrigerator.

PTL 1 discloses a cold storage material composition in which, during use after cooling, the time of being maintained within an unintended temperature range lower than control temperature before reaching the control temperature is short. This cold storage material composition contains water, a quaternary ammonium salt, and a hydroxy-containing organic compound. The quaternary ammonium salt forms a clathrate hydrate. In the hydroxy-containing organic compound, the number of carbon atoms is 1 to 12, and the number of hydroxy groups is 0.3 to 1.0 times the number of carbon atoms in one molecule. The concentration of the quaternary ammonium salt is lower than the saturated concentration and 15 mass% or more, and the content of the hydroxy-containing organic compound is 2.5 to 16 mass%.

PTL 1 discloses in paragraph number 0036 that examples of more preferable combinations of the quaternary ammonium salt and the hydroxy-containing organic compound contained in the cooling composition are the following combinations of a material (a) and a material (b):

(a) one or both of tetra-n-butylammonium bromide and tetra-n-butylammonium fluoride; and
(b) at least one selected from the group consisting of methanol, ethanol, 1-propanol, 2-propanol, ethylene glycol, propylene glycol, diethylene glycol, glycerin, sorbitol, mannitol, xylitol, erythritol, glucose, fructose, mannose, arabinose, sucrose, lactose, maltose, trehalose, ascorbic acid, and sodium ascorbate.

PTL 2 (in particular, paragraph number 0023) and PTL 3 (in particular, paragraph number 0040) disclose that an alcohol is used for decreasing the melting point of tetra-n-butylammonium bromide.

PTL 4 discloses a heat storage material in which potassium alum is added to an aqueous solution containing a tetraalkylammonium salt. PTL 5 discloses a heat storage material containing tetra-n-butylammonium bromide hydrate, tri-n-butyl-n-pentylammonium bromide hydrate, and tetra-n-butylammonium fluoride.

Citation List

Patent Literature

PTL 1: Japanese Unexamined Patent Application Publication No. 2017-179299
PTL 2: Japanese Unexamined Patent Application Publication No. 2007-163045
PTL 3: Japanese Unexamined Patent Application Publication No. 2010-018879
PTL 4: Japanese Patent No. 6226488
PTL 5: Japanese Patent No. 4839903

Non Patent Literature

NPL 1: Mohamed Rady et. al., "A Comparative Study of Phase Changing Characteristics of Granular Phase Change Materials Using DSC and T-History Methods", Tech. Science Press FDMP, vol. 6, no. 2, pp. 137-152, 2010

Summary of Invention

Technical Problem

It is an object of the present invention to provide a heat storage material composition suitable for a refrigerator or a cold-storage warehouse.

Solution to Problem

A cold storage material composition according to a first aspect of the present invention contains:

tetra-n-butylammonium bromide;
water; and
1-propanol, wherein
the weight ratio of the tetra-n-butylammonium bromide to the water is greater than or equal to 37.5/62.5 and less than or equal to 40/60;
the molar ratio of the 1-propanol to the water is greater than or equal to 0.043 and less than or equal to 0.065;
the cold storage material composition has a fusion heat of greater than or equal to 135 J/g within a range of higher than or equal to 2 degrees Celsius and lower than or equal to 8 degrees Celsius; and
the cold storage material composition has a heat flow peak within a range of higher than or equal to 2 degrees Celsius and lower than or equal to 8 degrees Celsius.

A cold storage material composition according to a second aspect of the present invention contains:

tetra-n-butylammonium bromide;
water; and
1-propanol, wherein
the weight ratio of the tetra-n-butylammonium bromide to the water is greater than or equal to 32.5/67.5 and less than or equal to 42.5/57.5;
the molar ratio of the 1-propanol to the water is greater than or equal to 0.02 and less than or equal to 0.042;
the cold storage material composition has a fusion heat of greater than or equal to 135 J/g within a range of higher than or equal to 5 degrees Celsius and lower than or equal to 12 degrees Celsius; and
the cold storage material composition has a heat flow peak within a range of higher than or equal to 5 degrees Celsius and lower than or equal to 12 degrees Celsius.

A cold storage material composition according to a third aspect of the present invention contains:

tetra-n-butylammonium bromide;
water; and
1-butanol, wherein
the weight ratio of the tetra-n-butylammonium bromide to the water is greater than or equal to 30/70 and less than or equal to 42.5/57.5;
the molar ratio of the 1-butanol to the water is greater than or equal to 0.02 and less than or equal to 0.035;
the cold storage material composition has a fusion heat of greater than or equal to 135 J/g within a range of higher than or equal to 5 degrees Celsius and lower than or equal to 12 degrees Celsius; and
the cold storage material composition has a heat flow peak within a range of higher than or equal to 5 degrees Celsius and lower than or equal to 12 degrees Celsius.

Advantageous Effects of Invention

It is an object of the present invention to provide a heat storage material composition suitable for a refrigerator or a cold-storage warehouse.

Brief Description of Drawings

[Fig. 1] Fig. 1 is a graph showing the results of differential scanning calorimetry of Example A1 and Comparative Example A1.
[Fig. 2] Fig. 2 is a graph showing the results of differential scanning calorimetry of Example A2 and Comparative Example A1.
[Fig. 3] Fig. 3 is a graph showing the results of differential scanning calorimetry of Example A3 and Comparative Example A1.
[Fig. 4] Fig. 4 is a graph showing the results of differential scanning calorimetry of Example A4 and Comparative Example A1.

[Fig. 5] Fig. 5 is a graph showing the results of differential scanning calorimetry of Example A5 and Comparative Example A1.

[Fig. 6] Fig. 6 is a graph showing the results of differential scanning calorimetry of Example A6 and Comparative Example A1.

[Fig. 7] Fig. 7 is a graph showing the results of differential scanning calorimetry of Example A7 and Comparative Example A1.

[Fig. 8] Fig. 8 is a graph showing the results of differential scanning calorimetry of Comparative Example A3 and Comparative Example A1.

[Fig. 9] Fig. 9 is a graph showing the results of differential scanning calorimetry of Comparative Example A7 and Comparative Example A1.

[Fig. 10] Fig. 10 is a graph showing the results of differential scanning calorimetry of Comparative Example A9 and Comparative Example A1.

[Fig. 11] Fig. 11 is a graph showing the results of differential scanning calorimetry of Comparative Example A10 and Comparative Example A1.

[Fig. 12] Fig. 12 is a graph showing the results of differential scanning calorimetry of Comparative Example A18 and Comparative Example A1.

[Fig. 13] Fig. 13 is a graph showing the results of differential scanning calorimetry of Comparative Example A21 and Comparative Example A1.

[Fig. 14] Fig. 14 is a graph showing the results of differential scanning calorimetry of Comparative Example A22 and Comparative Example A1.

[Fig. 15] Fig. 15 is a graph showing the results of differential scanning calorimetry of Comparative Example A26 and Comparative Example A1.

[Fig. 16] Fig. 16 is a graph showing the results of differential scanning calorimetry of Example B1 and Comparative Example B1.

[Fig. 17] Fig. 17 is a graph showing the results of differential scanning calorimetry of Example B2 and Comparative Example B1.

[Fig. 18] Fig. 18 is a graph showing the results of differential scanning calorimetry of Example B3 and Comparative Example B1.

[Fig. 19] Fig. 19 is a graph showing the results of differential scanning calorimetry of Example B4 and Comparative Example B1.

[Fig. 20] Fig. 20 is a graph showing the results of differential scanning calorimetry of Example B5 and Comparative Example B1.

[Fig. 21] Fig. 21 is a graph showing the results of differential scanning calorimetry of Example B6 and Comparative Example B1.

[Fig. 22] Fig. 22 is a graph showing the results of differential scanning calorimetry of Example B7 and Comparative Example B1.

[Fig. 23] Fig. 23 is a graph showing the results of differential scanning calorimetry of Example B8 and Comparative Example B1.

[Fig. 24] Fig. 24 is a graph showing the results of differential scanning calorimetry of Example B9 and Comparative Example B1.

[Fig. 25] Fig. 25 is a graph showing the results of differential scanning calorimetry of Example B10 and Comparative Example B1.

[Fig. 26] Fig. 26 is a graph showing the results of differential scanning calorimetry of Example B11 and Comparative Example B1.

[Fig. 27] Fig. 27 is a graph showing the results of differential scanning calorimetry of Example B12 and Comparative Example B1.

[Fig. 28] Fig. 28 is a graph showing the results of differential scanning calorimetry of Example B13 and Comparative Example B1.

[Fig. 29] Fig. 29 is a graph showing the results of differential scanning calorimetry of Example B14 and Comparative Example B1.

[Fig. 30] Fig. 30 is a graph showing the results of differential scanning calorimetry of Example B15 and Comparative Example B1.

[Fig. 31] Fig. 31 is a graph showing the results of differential scanning calorimetry of Comparative Example B2 and Comparative Example B1.

[Fig. 32] Fig. 32 is a graph showing the results of differential scanning calorimetry of Comparative Example B7 and Comparative Example B1.

[Fig. 33] Fig. 33 is a graph showing the results of differential scanning calorimetry of Comparative Example B11 and Comparative Example B1.

[Fig. 34] Fig. 34 is a graph showing the results of differential scanning calorimetry of Comparative Example B15 and Comparative Example B1.

[Fig. 35] Fig. 35 is a graph showing the results of differential scanning calorimetry of Comparative Example B20 and Comparative Example B1.

[Fig. 36] Fig. 36 is a graph showing the results of differential scanning calorimetry of Comparative Example B23 and Comparative Example B1.

[Fig. 37] Fig. 37 is a graph showing the results of differential scanning calorimetry of Comparative Example B25 and Comparative Example B1.

[Fig. 38] Fig. 38 is a graph showing the results of differential scanning calorimetry of Comparative Example B27 and Comparative Example B1.

[Fig. 39] Fig. 39 is a graph showing the results of differential scanning calorimetry of Comparative Example B30 and Comparative Example B1.

[Fig. 40] Fig. 40 is a graph showing the results of differential scanning calorimetry of Comparative Example B31 and Comparative Example B1.

[Fig. 41] Fig. 41 is a graph showing the results of differential scanning calorimetry of Comparative Example B34 and Comparative Example B1.

[Fig. 42] Fig. 42 is a graph showing the characteristics of a cold storage material during cooling.

[Fig. 43] Fig. 43 is a graph showing the characteristics of a cold storage material during warming.

Description of Embodiments

(Definition of terms)

The term "available fusion heat" used in the present specification means a fusion heat within a range of higher than or equal to 2 degrees Celsius and lower than or equal to 8 degrees Celsius.

The term "unavailable fusion heat" used in the present specification means a fusion heat outside the range of higher than or equal to 2 degrees Celsius and lower than or equal to 8 degrees Celsius.

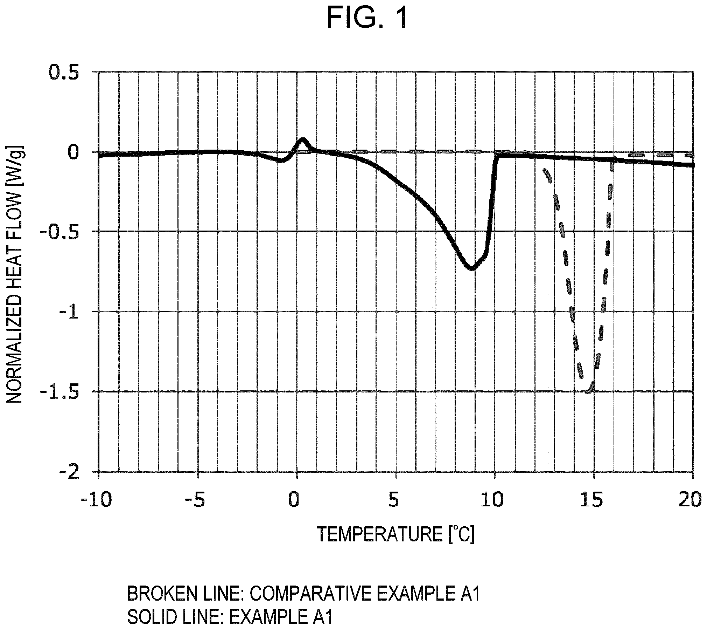

The fusion heat can be, as well known in the technical field of cold storage material compositions, measured with a differential scanning calorimeter (this can be also referred to as "DSC"). As also demonstrated in Examples described below, the differential scanning calories of a cold storage material composition are measured using a differential scanning calorimeter. The results of the differential scanning calories are shown by graphs. See Figs. 1 to 15 and Figs. 16 to 41. In these graphs, the horizontal axis and the vertical axis indicate the temperature and the normalized heat flow, respectively. The fusion heat within a range of higher than or equal to 2 degrees Celsius and lower than or equal to 8 degrees Celsius is equal to the integrated value of the differential scanning calories within a range of higher than or equal to 2 degrees Celsius and lower than or equal to 8 degrees Celsius in the graphs. Similarly, the fusion heat within a range of higher than or equal to 5 degrees Celsius and lower than or equal to 12 degrees Celsius is equal to the integrated value of the differential scanning calories within a range of higher than or equal to 5 degrees Celsius and lower than or equal to 12 degrees Celsius in the graphs.

The term "refrigerator" used in the present specification means an electric refrigerator and a portable cooler box of which the insides are cooled. The term "cold-storage warehouse" used in the present specification means a building of which the inside is cooled.

Embodiments of the present invention will now be described.

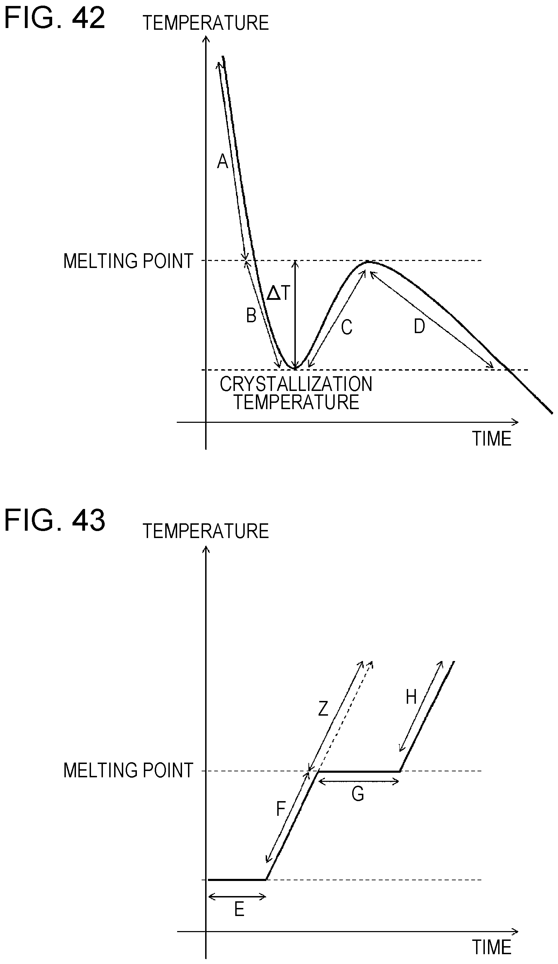

Fig. 42 is a graph showing the characteristics of a cold storage material composition during cooling. In Fig. 42, the horizontal axis and the vertical axis indicate the time and the temperature, respectively.

The cold storage material composition is cooled. See the section A included in Fig. 42. Unlike the case of general liquids, as well known in the technical field of cold storage material compositions, even if the temperature of the cold storage material composition being cooled reaches the melting point thereof, the cold storage material composition does not solidify and becomes a supercooled state. See the section B included in Fig. 42. In the supercooled state, the cold storage material composition is a liquid.

Subsequently, the cold storage material composition begins to crystallize spontaneously. With crystallization, the cold storage material composition releases crystallization heat that is almost equal to latent heat. As a result, the temperature of the cold storage material composition begins to increase. See the section C included in Fig. 42. In the present specification, the temperature at which the cold storage material composition begins to crystallize spontaneously is referred to as "crystallization temperature".

$\Delta T$ represents the difference between the melting point and the crystallization temperature of a cold storage material composition. The $\Delta T$ can also be called a "degree of supercooling". The cold storage material composition in the supercooled state becomes clath hydrate crystals by crystallization (for example, see PTL 1). Here, the clathrate hydrate crystal refers to a crystal formed by wrapping a substance other than water in a cage-like crystal of water molecules formed by hydrogen bonding. Unless otherwise stated, in the present specification, the term "clathrate hydrate crystal" includes not only a clathrate hydrate crystal but also a semi-clath hydrate crystal. The semi-clathrate hydrate crystal refers to a crystal formed when guest molecules participate in the hydrogen bond network of water molecules. The concentration at which water molecules and guest molecules form a hydrate crystal in just proportion is referred to as a harmonic concentration. In general, the hydrate crystals are often used around the harmonic concentration.

After completion of release of the crystallization heat of the cold storage material composition with completion of crystallization, the temperature of the cold storage material composition gradually decreases so as to be equal to the ambient temperature. See the section D included in Fig. 42.

The crystallization temperature is lower than the melting point of the cold storage material composition. The melting point of the cold storage material composition can be measured, as well known in the technical field of cold storage material compositions, with a differential scanning calorimeter (this can be also referred to as "DSC").

Fig. 43 is a graph showing the characteristics of a cold storage material composition during warming. In Fig. 43, the horizontal axis and the vertical axis indicate the time and the temperature, respectively. The temperature of the cold storage material composition in the section E is maintained at lower than or equal to the crystallization temperature. For example, the temperature of the inside of a refrigerator is set to lower than or equal to the crystallization temperature such that the temperature of the cold storage material composition disposed in the refrigerator is maintained at lower than or equal to the crystallization temperature while the door of the refrigerator is closed.

Subsequently, the cold storage material composition is gradually warmed. See the section F included in Fig. 43. For example, when the door of the refrigerator is opened at the end of the section E (i.e., the start of the section F) (or when the door is opened and a foodstuff is stored), the temperature of the inside for the refrigerator gradually increases.

When the temperature of the cold storage material composition reaches the melting point of the cold storage material composition, the temperature of the cold storage material composition is maintained around the melting point of the cold storage material composition. See the section G included in Fig. 43. If the cold storage material composition is not present, the temperature of the inside of the refrigerator continuously increases as shown in the section Z included in Fig. 43. In contrast, when the cold storage material composition is present, the temperature of the inside of the refrigerator is maintained around the melting point of the cold storage material composition for a certain period of the section G. Thus, the cold storage material composition exhibits the cool storage effect. At the end of the section G, the crystals of the cold storage material composition melt and disappear. Consequently, the cold storage material composition liquefies.

Subsequently, the temperature of the liquefied cold storage material composition increases so as to be equal to the ambient temperature. See the section H included in Fig. 43.

The cold storage material composition is cooled and can be reused. For example, after the door of the refrigerator is closed, as shown by the section A included in Fig. 42, the cold storage material composition is cooled again and is reused.

(First Embodiment)

In a first embodiment, a cold storage material composition that is suitably used for a refrigerator should satisfy the following two conditions (AI) and (AII):

Condition (AI): the cold storage material composition has a large fusion heat of greater than or equal to 135 J/g within a range of higher than or equal to 2 degrees Celsius and lower than or equal to 8 degrees Celsius; and
Condition (AII): the cold storage material composition has a heat flow peak within a range of higher than or equal to 2 degrees Celsius and lower than or equal to 8 degrees Celsius.

The reason for the conditions (AI) and (AII) is that the temperature of the inside of a refrigerator should be maintained at higher than or equal to about 0 degrees Celsius and lower than or equal to about 12 degrees Celsius (as an example, higher than or equal to 2 degrees Celsius and lower than or equal to 8 degrees Celsius). In other words, if the temperature of the inside of a cooler is maintained at lower than 0 degrees Celsius, such a cooler is not a "refrigerator" but a "freezer". In contrast, from the viewpoint of food preservation, if the temperature of the inside of a cooler is maintained at higher than 12 degrees Celsius, such a cooler would have little meaning of actual use as a refrigerator.

The cold storage material according to the first embodiment is used for not only a refrigerator but also a cold-storage warehouse.

The cold storage material composition according to the first embodiment contains tetra-n-butylammonium bromide, water, and 1-propanol.

If 1-butanol is not contained in the cold storage material composition, as demonstrated in Comparative Example A1, the available fusion heat is equal to 0. Accordingly, a cold storage material composition not containing 1-propanol is unsuitable for a refrigerator or a cold-storage warehouse.

If an alcohol other than 1-propanol is used, as demonstrated in Comparative Examples A2 to A13, the available fusion heat is less than 135 J/g. In this case, since the section G (see Fig. 43) is shorter than that in the cold storage material composition of the first embodiment, the cooling efficiency of the cold storage material composition is lower than that of the cold storage material composition of the first embodiment.

In the cold storage material composition of the first embodiment, the weight ratio of tetra-n-butylammonium bromide to water is greater than or equal to 37.5/62.5 (i.e., about 0.48) and less than or equal to 40/60 (i.e., about 0.74).

If the weight ratio is less than 37.5/62.5 (i.e., about 0.48), as demonstrated in Comparative Examples A22 to A24, the available fusion heat is less than 135 J/g. Accordingly, in this case, the cooling efficiency of the cold storage material composition is low.

If the weight ratio is greater than 40/60 (i.e., about 0.74), as demonstrated in Comparative Examples A25 and A26, the available fusion heat is less than 135 J/g. Accordingly, in this case, the cooling efficiency of the cold storage material composition is low.

In the cold storage material composition of the first embodiment, the molar ratio of 1-propanol to water is greater than or equal to 0.043 and less than or equal to 0.065.

If the molar ratio is less than 0.043, as demonstrated in Comparative Examples A14 to A20, the available fusion heat is less than 135 J/g. Accordingly, in this case, the cooling efficiency of the cold storage material composition is low.

If the molar ratio is greater than 0.065, as demonstrated in Comparative Example A21, the available fusion heat is less than 135 J/g. Accordingly, also in this case, the cooling efficiency of the cold storage material composition is low.

The cold storage material composition of the first embodiment has, as demonstrated in Examples A1 to A8, a fusion heat of greater than or equal to 135 J/g within a range of higher than or equal to 2 degrees Celsius and lower than or equal to 8 degrees Celsius. When the cold storage material composition of the first embodiment is used, the section G (see Fig. 43) is long. Accordingly, the cold storage material composition of the first embodiment has a high cooling efficiency.

The cold storage material composition has a heat flow peak within a range of higher than or equal to 2 degrees Celsius and lower than or equal to 8 degrees Celsius. If a cold storage material composition not having a heat flow peak within a range of higher than or equal to 2 degrees Celsius and lower than or equal to 8 degrees Celsius, like the cold storage material composition of Comparative Example A1, is used, the unavailable fusion heat is larger than the available fusion heat. Accordingly, in this case, since the cooling efficiency within a range of higher than or equal to 2 degrees Celsius and lower than or equal to 8 degrees Celsius is low, the cold storage material composition is unsuitable for a refrigerator or a cold-storage warehouse. In other words, the available fusion heat is decreased as the heat flow peak rises above 8 degrees Celsius or decreases below 2 degrees Celsius. Accordingly, when the cold storage material composition does not have a heat flow peak within a range of higher than or equal to 2 degrees Celsius and lower than or equal to 8 degrees Celsius, the cooling efficiency within a range of higher than or equal to 2 degrees Celsius and lower than or equal to 8 degrees Celsius is low.

(Second Embodiment)

In a second embodiment, a cold storage material composition that is suitably used for a refrigerator should satisfy the following two conditions (BI) and (BII):

Condition (BI): the cold storage material composition has a large fusion heat of greater than or equal to 135 J/g within a range of higher than or equal to 5 degrees Celsius and lower than or equal to 12 degrees Celsius; and
Condition (BII): the cold storage material composition has a heat flow peak within a range of higher than or equal to 5 degrees Celsius and lower than or equal to 12 degrees Celsius.

The reason for the conditions (BI) and (BII) is that the temperature of the inside of a refrigerator should be maintained at higher than or equal to about 0 degrees Celsius and lower than or equal to about 12 degrees Celsius (as an example, higher than or equal to 5 degrees Celsius and lower than or equal to 12 degrees Celsius). In other words, if the temperature of the inside of a cooler is maintained at lower than 0 degrees Celsius, such a cooler is not a "refrigerator" but a "freezer". In contrast, from the viewpoint of food preservation, if the temperature of the inside of a cooler is maintained at higher than 12 degrees Celsius, such a cooler would have little meaning of actual use as a refrigerator.

The cold storage material according to the second embodiment is used for not only a refrigerator but also a cold-storage warehouse.

The cold storage material composition of the second embodiment contains tetra-n-butylammonium bromide, water, and 1-propanol.

If 1-butanol is not contained in the cold storage material composition, as demonstrated in Comparative Example B1, the available fusion heat is equal to 0. Accordingly, a cold storage material composition not containing 1-propanol is unsuitable for a refrigerator or a cold-storage warehouse.

If an alcohol other than 1-propanol is used, as demonstrated in Comparative Examples B2 to B13, the available fusion heat is less than 135 J/g. In this case, since the section G (see Fig. 43) is shorter than that in the cold storage material composition of the second embodiment, the cooling efficiency of the cold storage material composition is lower than the cold storage material composition of the second embodiment.

In the cold storage material composition of the second embodiment, the weight ratio of tetra-n-butylammonium bromide to water is greater than or equal to 32.5/67.5 (i.e., about 0.48) and less than or equal to 42.5/57.5 (i.e., about 0.74).

If the weight ratio is less than 32.5/67.5 (i.e., about 0.48), as demonstrated in Comparative Example B23, the available fusion heat is less than 135 J/g. Accordingly, in this case, the cooling efficiency of the cold storage material composition is low.

If the weight ratio is greater than 42.5/57.5 (i.e., about 0.74), as demonstrated in Comparative Example B24, the available fusion heat is less than 135 J/g. Accordingly, also in this case, the cooling efficiency of the cold storage material composition is low.

In the cold storage material composition of the second embodiment, the molar ratio of 1-propanol to water is greater than or equal to 0.02 and less than or equal to 0.042.

If the molar ratio is less than 0.02, as demonstrated in Comparative Examples B14 and B15, the available fusion heat is less than 135 J/g. Accordingly, in this case, the cooling efficiency of the cold storage material composition is low.

If the molar ratio is greater than 0.042, as demonstrated in Comparative Examples B16 to B22, the available fusion heat is less than 135 J/g. Accordingly, also in this case, the cooling efficiency of the cold storage material composition is low.

The cold storage material composition of the second embodiment has, as demonstrated in Examples B1 to B8, a fusion heat of greater than or equal to 135 J/g within a range of higher than or equal to 5 degrees Celsius and lower than or equal to 12 degrees Celsius. When the cold storage material composition of the second embodiment is used, the section G (see Fig. 43) is long. Accordingly, the cold storage material composition of the second embodiment has a high cooling efficiency.

The cold storage material composition has a heat flow peak within a range of higher than or equal to 5 degrees Celsius and lower than or equal to 12 degrees Celsius. If a cold storage material composition not having a heat flow peak within a range of higher than or equal to 5 degrees Celsius and lower than or equal to 12 degrees Celsius, like the cold storage material composition of Comparative Example B1, is used, the unavailable fusion heat is larger than the available fusion heat. Accordingly, in this case, since the cooling efficiency within a range of higher than or equal to 5 degrees Celsius and lower than or equal to 12 degrees Celsius is low, the cold storage material composition is unsuitable for a refrigerator or a cold-storage warehouse. In other words, the available fusion heat is decreased as the heat flow peak rises above 12 degrees Celsius or decreases below 5 degrees Celsius. Accordingly, when the cold storage material composition does not have a heat flow peak within a range of higher than or equal to 5 degrees Celsius and lower than or equal to 12 degrees Celsius, the cooling efficiency within a range of higher than or equal to 5 degrees Celsius and lower than or equal to 12 degrees Celsius is low.

(Third Embodiment)

As in the second embodiment, in a third embodiment, a cold storage material composition that is suitably used for a refrigerator should satisfy the following two conditions (BI) and (BII):

Condition (BI): the cold storage material composition has a large fusion heat of greater than or equal to 135 J/g within a range of higher than or equal to 5 degrees Celsius and lower than or equal to 12 degrees Celsius; and
Condition (BII): the cold storage material composition has a heat flow peak within a range of higher than or equal to 5 degrees Celsius and lower than or equal to 12 degrees Celsius.

The reason for the conditions (BI) and (BII) is that the temperature of the inside of a refrigerator should be maintained at higher than or equal to about 0 degrees Celsius and lower than or equal to about 12 degrees Celsius (as an example, higher than or equal to 5 degrees Celsius and lower than or equal to 12 degrees Celsius). In other words, if the temperature of the inside of a cooler is maintained at lower than 0 degrees Celsius, such a cooler is not a "refrigerator" but a "freezer". In contrast, from the viewpoint of food preservation, if the temperature of the inside of a cooler is maintained at higher than 12 degrees Celsius, such a cooler would have little meaning of actual use as a refrigerator.

The cold storage material according to the third embodiment is used for not only a refrigerator but also a cold-storage warehouse.

The cold storage material composition of the third embodiment contains tetra-n-butylammonium bromide, water, and 1-butanol.

The problems that arise when 1-butanol is not contained in the cold storage material composition and when an alcohol other than 1-butanol is used are described in the second embodiment.

In the cold storage material composition of the third embodiment, the weight ratio of tetra-n-butylammonium bromide to water is greater than or equal to 30/70 (i.e., about 0.43) and less than or equal to 42.5/57.5 (i.e., about 0.74).

If the weight ratio is less than 30/70 (i.e., about 0.48), as demonstrated in Comparative Examples B31 and B32, the available fusion heat is less than 135 J/g. Accordingly, in this case, the cooling efficiency of the cold storage material composition is low.

If the weight ratio is greater than 42.5/57.5 (i.e., about 0.74), as demonstrated in Comparative Examples B33 and B34, the available fusion heat is less than 135 J/g. Accordingly, also in this case, the cooling efficiency of the cold storage material composition is low.

In the cold storage material composition of the third embodiment, the molar ratio of 1-butanol to water is greater than or equal to 0.02 and less than or equal to 0.035.

If the molar ratio is less than 0.02, as demonstrated in Comparative Examples B26 and B27, the available fusion heat is less than 135 J/g. Accordingly, in this case, the cooling efficiency of the cold storage material composition is low.

If the molar ratio is greater than 0.035, as demonstrated in Comparative Examples B28 and B29, the available fusion heat is less than 135 J/g. Accordingly, also in this case, the cooling efficiency of the cold storage material composition is low.

As in the cold storage material composition of the second embodiment, the cold storage material composition of the third embodiment has, as demonstrated in Examples B9 to B15, a fusion heat of 135 J/g within a range of higher than or equal to 5 degrees Celsius and lower than or equal to 12 degrees Celsius. When the cold storage material composition of the third embodiment is used, the section G (see Fig. 43) is long. Accordingly, the cold storage material composition of the third embodiment has a high cooling efficiency.

As in the cold storage material composition of the second embodiment, the cold storage material composition of the third embodiment has a heat flow peak within a range of higher than or equal to 5 degrees Celsius and lower than or equal to 12 degrees Celsius.

(Examples)

The present invention will now be described in more detail with reference to the following Examples.

(Example A1)

(Method for manufacturing heat storage material composition)

First, tetra-n-butylammonium bromide (40 g) and water (60 g) were mixed inside a screw tube having a capacity of 110 mL to obtain a mixture liquid. The screw tube was a glass tube with a screw lid.

Next, the mixture liquid (9.06 g) was taken out from the screw tube having a capacity of 110 mL and was then supplied to a screw tube having a capacity of 60 mL. Furthermore, 1-propanol (0.94 g, manufactured by FUJIFILM Wako Pure Chemical Corporation) was added to the screw tube having a capacity of 60 mL. 1-Propanol was used as an additive. Thus, a heat storage material composition according to Example A1 was obtained.

(Measurement experiment)

The heat storage material composition (2 mg) of Example A1 was supplied to a container (obtained from PerkinElmer Co., Ltd., trade name: 02192005). The container was incorporated in a differential scanning calorimeter (obtained from PerkinElmer Co., Ltd., trade name: DSC-8500). The cold storage material composition contained in the container was cooled from an ordinary temperature to -30 degrees Celsius at a rate of 1 degree Celsius/min and was then left to stand at -30 degrees Celsius for 5 minutes to crystallize the cold storage material.

The crystallized cold storage material composition was warmed from -30 degrees Celsius to 30 degrees Celsius at a rate of 1 degree Celsius/min. Thus, the crystallized cold storage material was melted.

During the warming of the crystallized cold storage material composition from -30 degrees Celsius to 30 degrees Celsius at a rate of 1 degree Celsius/min as described above, the differential scanning calorimeter output a heat flow (unit: W).

A normalized heat flow was calculated according to the following mathematical expression:

$$\text{(Normalized heat flow, unit: W/g)} = \text{(heat flow)/(weight of cold storage}$$

$$\text{material, i.e., 2 mg).}$$

Fig. 1 is a graph showing the results of the thus-performed differential scanning calorimetry.

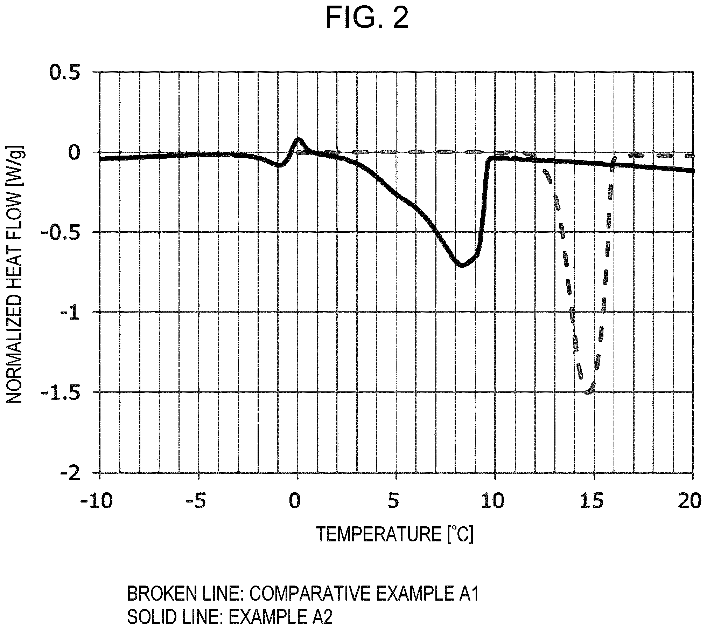

The integrated value of the differential scanning calories within a range of higher than or equal to 2 degrees Celsius and lower than or equal to 8 degrees Celsius in Fig. 1 was calculated as the available fusion heat within a range of higher than or equal to 2 degrees Celsius and lower than or equal to 8 degrees Celsius. See also Fig. 2 of NPL 1.

Consequently, the cold storage material composition of Example A1 had an available fusion heat of 135.2 J/g.

(Example A2)

In Example A2, the same experiment as Example A1 was performed except that the molar ratio of the additive to water was 0.045. Fig. 2 is a graph showing the comparison between the DSC measurement results of Example A2 and Comparative Example A1.

(Example A3)

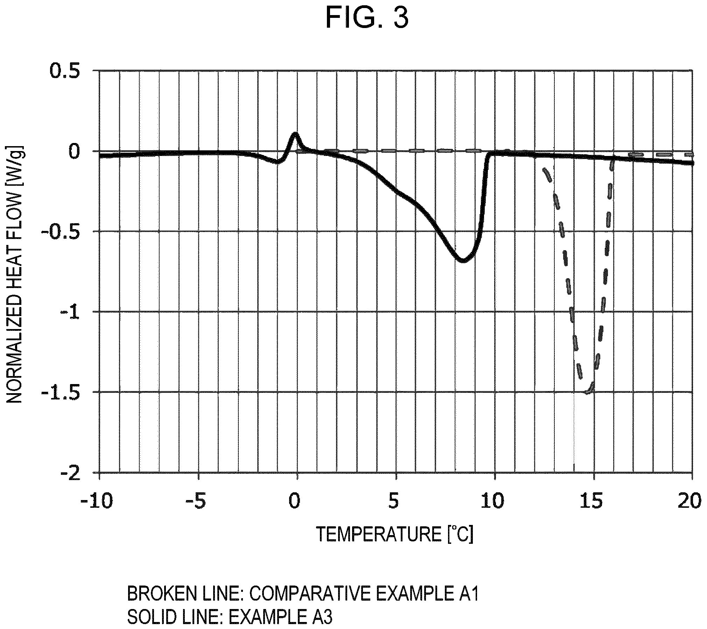

In Example A3, the same experiment as Example A1 was performed except that the molar ratio of the additive to water was 0.047. Fig. 3 is a graph showing the comparison between the DSC measurement results of Example A3 and Comparative Example A1.

(Example A4)

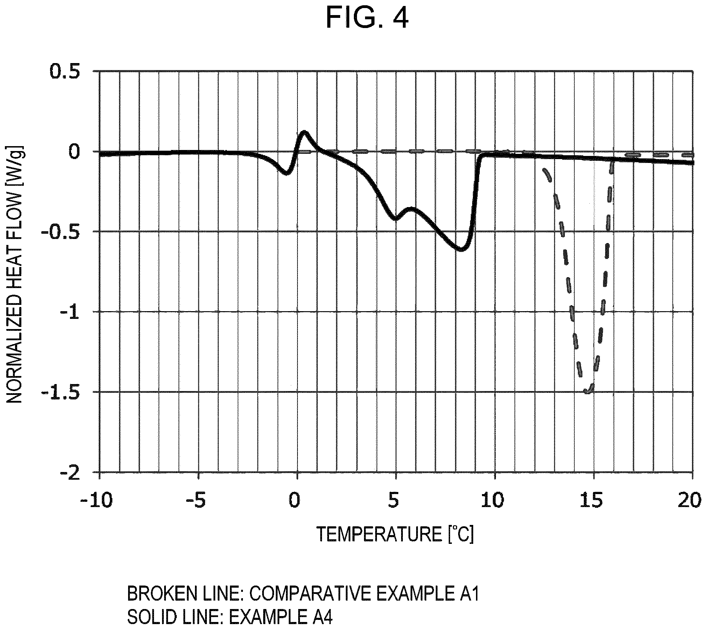

In Example A4, the same experiment as Example A1 was performed except that the molar ratio of the additive to water was 0.052. Fig. 4 is a graph showing the comparison between the DSC measurement results of Example A4 and Comparative Example A1.

(Example A5)

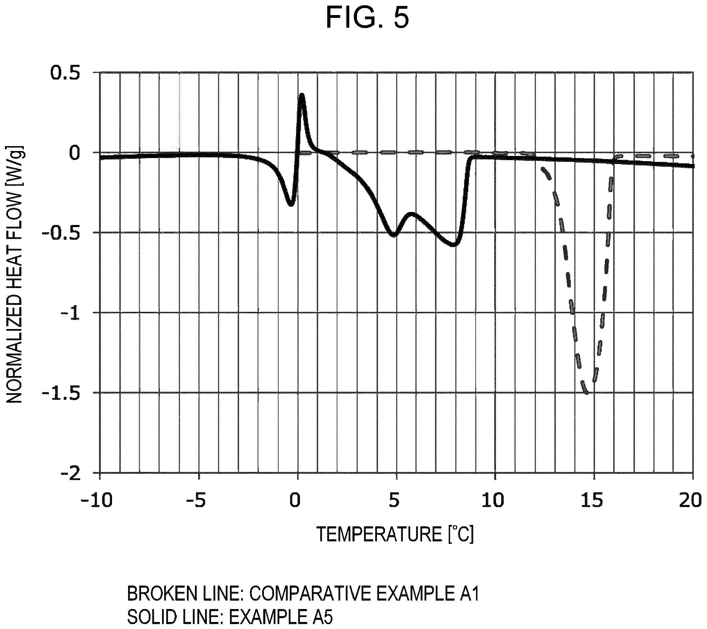

In Example A5, the same experiment as Example A1 was performed except that the molar ratio of the additive to water was 0.06. Fig. 5 is a graph showing the comparison between the DSC measurement results of Example A5 and Comparative Example A1.

(Example A6)

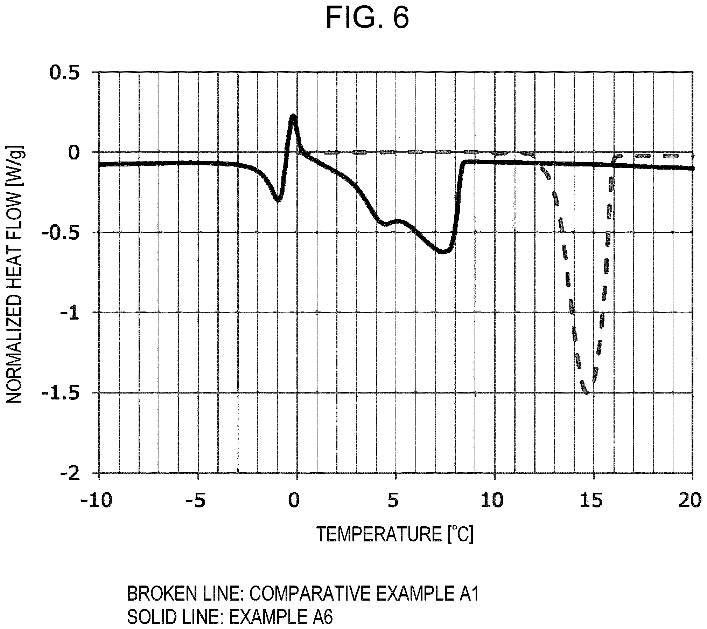

In Example A6, the same experiment as Example A1 was performed except that the molar ratio of the additive to water was 0.065. Fig. 6 is a graph showing the comparison between the DSC measurement results of Example A6 and Comparative Example A1.

(Example A7)

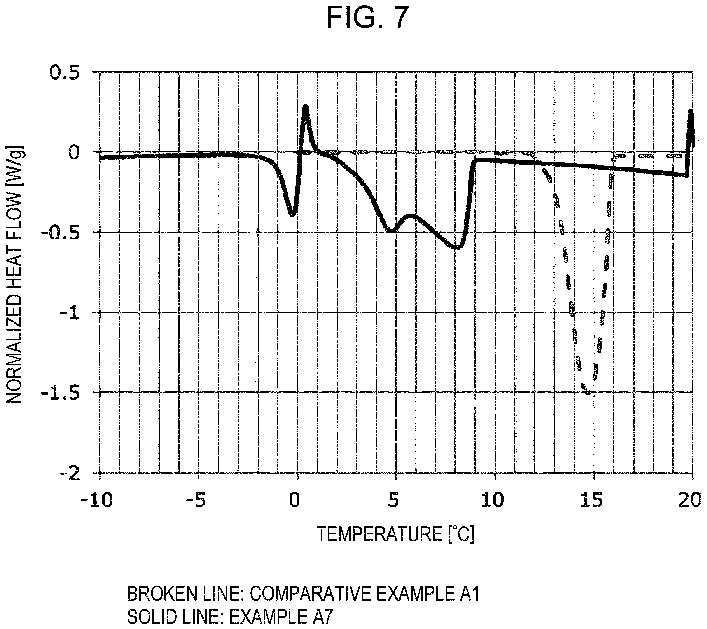

In Example A7, the same experiment as Example A2 was performed except that the weight ratio of tetra-n-butylammonium bromide to water was 37.5/62.5. Fig. 7 is a graph showing the comparison between the DSC measurement results of Example A7 and Comparative Example A1.

(Comparative Example A1)

In Comparative Example A1, the same experiment as Example A1 was performed except that the additive was not added.

(Comparative Example A2)

In Comparative Example A2, the same experiment as Example A4 was performed except that methanol (manufactured by FUJIFILM Wako Pure Chemical Corporation) was used as the additive.

(Comparative Example A3)

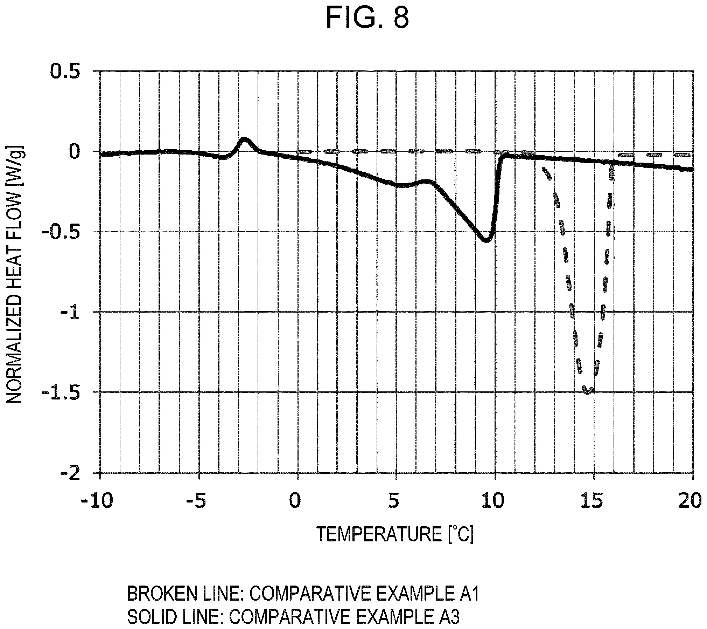

In Comparative Example A3, the same experiment as Example A4 was performed except that ethanol (manufactured by FUJIFILM Wako Pure Chemical Corporation) was used as the additive. Fig. 8 is a graph showing the comparison between the DSC measurement results of Comparative Example A3 and Comparative Example A1.

(Comparative Example A4)

In Comparative Example A4, the same experiment as Example A4 was performed except that 2-propanol (manufactured by FUJIFILM Wako Pure Chemical Corporation) was used as the additive.

(Comparative Example A5)

In Comparative Example A5, the same experiment as Example A4 was performed except that 1-butanol (manufactured by FUJIFILM Wako Pure Chemical Corporation) was used as the additive.

(Comparative Example A6)

In Comparative Example A6, the same experiment as Example A4 was performed except that 2-butanol (manufactured by FUJIFILM Wako Pure Chemical Corporation) was used as the additive.

(Comparative Example A7)

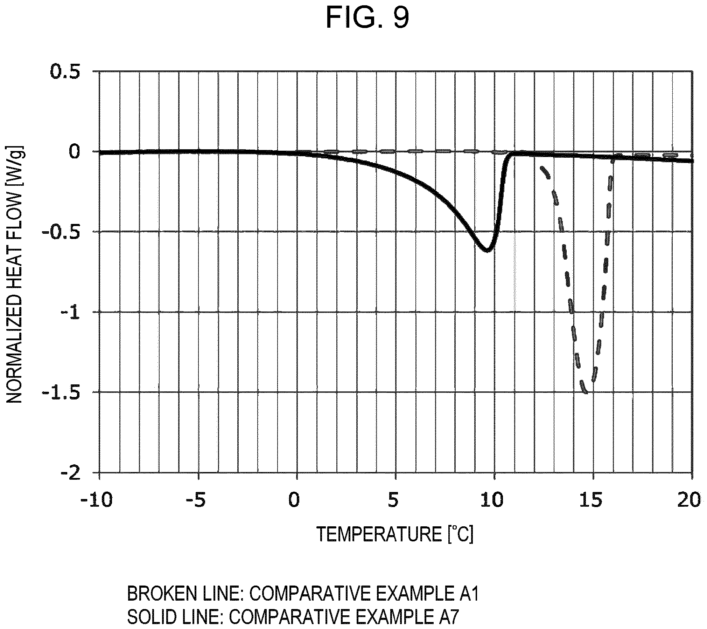

In Comparative Example A7, the same experiment as Example A4 was performed except that tert-butyl alcohol (manufactured by Tokyo Chemical Industry Co., Ltd.) was used as the additive. Fig. 9 is a graph showing the comparison between the DSC measurement results of Comparative Example A7 and Comparative Example A1.

(Comparative Example A8)

In Comparative Example A8, the same experiment as Example A4 was performed except that 1-pentanol (manufactured by FUJIFILM Wako Pure Chemical Corporation) was used as the additive.

(Comparative Example A9)

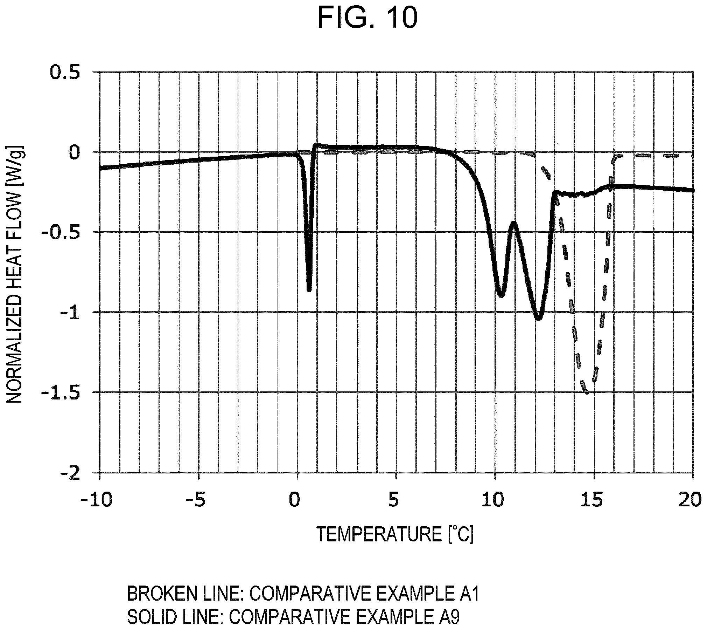

In Comparative Example A9, the same experiment as Example A4 was performed except that 1-hexanol (manufactured by FUJIFILM Wako Pure Chemical Corporation) was used as the additive. Fig. 10 is a graph showing the comparison between the DSC measurement results of Comparative Example A9 and Comparative Example A1.

(Comparative Example A10)

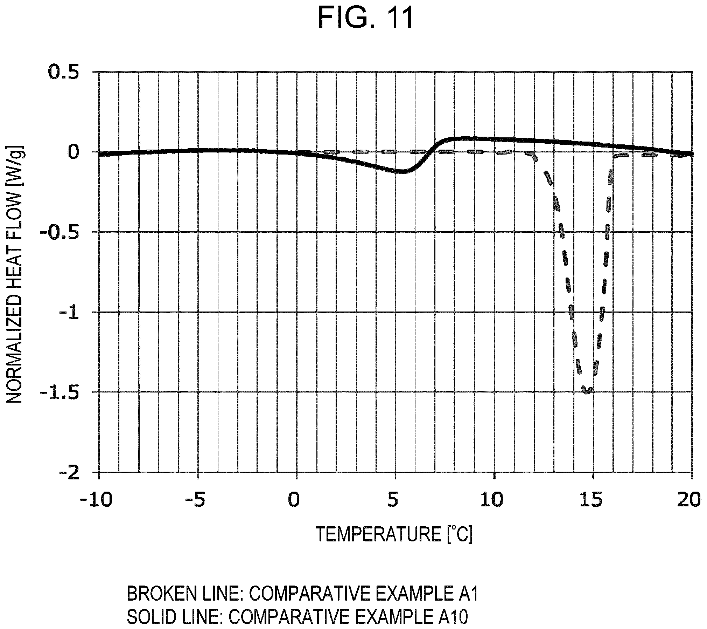

In Comparative Example A10, the same experiment as Example A4 was performed except that ethylene glycol (manufactured by FUJIFILM Wako Pure Chemical Corporation) was used as the additive. Fig. 11 is a graph showing the comparison between the DSC measurement results of Comparative Example A10 and Comparative Example A1.

(Comparative Example A11)

In Comparative Example A11, the same experiment as Example A4 was performed except that glycerin (manufactured by FUJIFILM Wako Pure Chemical Corporation) was used as the additive.

(Comparative Example A12)

In Comparative Example A12, the same experiment as Example A4 was performed except that meso-erythritol (manufactured by Tokyo Chemical Industry Co., Ltd.) was used as the additive.

(Comparative Example A13)

In Comparative Example A13, the same experiment as Example A4 was performed except that xylitol (manufactured by FUJIFILM Wako Pure Chemical Corporation) was used as the additive.

(Comparative Example A14)

In Comparative Example A14, the same experiment as Example A1 was performed except that the molar ratio of the additive to water was 0.011.

(Comparative Example A15)

In Comparative Example A15, the same experiment as Example A1 was performed except that the molar ratio of the additive to water was 0.015.

(Comparative Example A16)

In Comparative Example A16, the same experiment as Example A1 was performed except that the molar ratio of the additive to water was 0.02.

(Comparative Example A17)

In Comparative Example A17, the same experiment as Example A1 was performed except that the molar ratio of the additive to water was 0.022.

(Comparative Example A18)

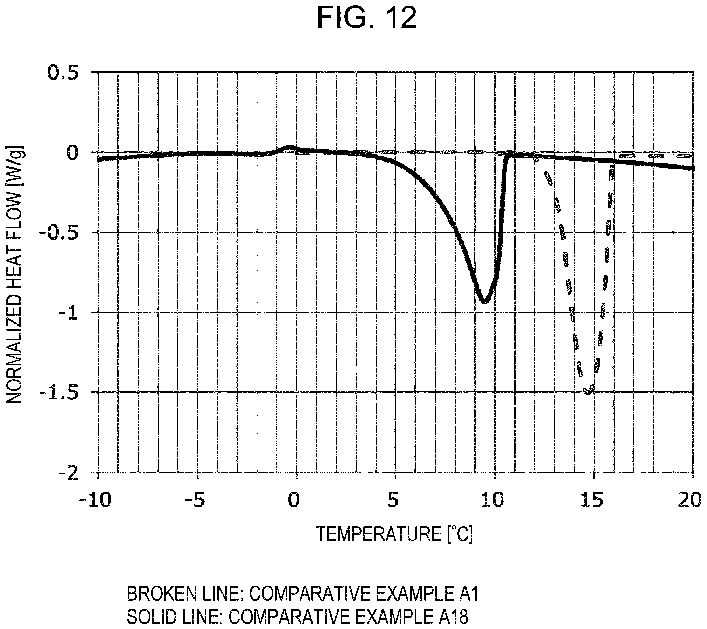

In Comparative Example A18, the same experiment as Example A1 was performed except that the molar ratio of the additive to water was 0.035. Fig. 12 is a graph showing the comparison between the DSC measurement results of Comparative Example A18 and Comparative Example A1.

(Comparative Example A19)

In Comparative Example A19, the same experiment as Example A1 was performed except that the molar ratio of the additive to water was 0.04.

(Comparative Example A20)

In Comparative Example A20, the same experiment as Example A1 was performed except that the molar ratio of the additive to water was 0.042.

(Comparative Example A21)

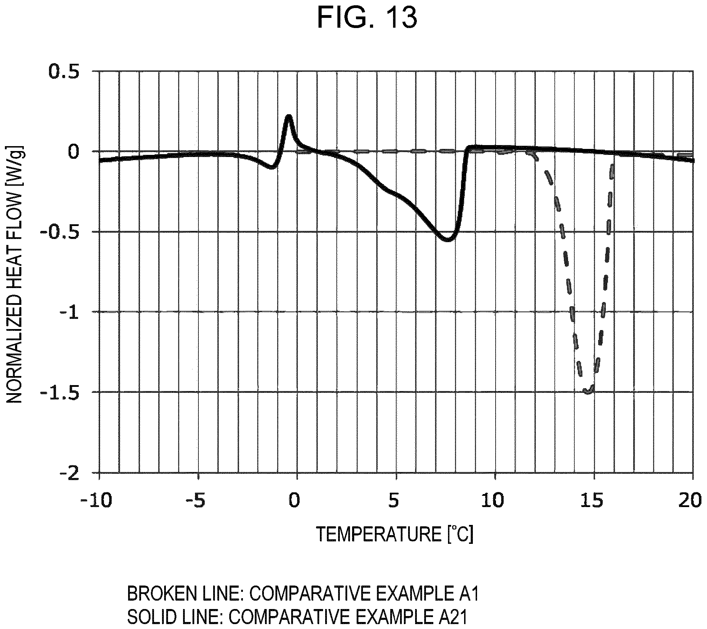

In Comparative Example A21, the same experiment as Example A1 was performed except that the molar ratio of the additive to water was 0.067. Fig. 13 is a graph showing the comparison between the DSC measurement results of Comparative Example A21 and Comparative Example A1.

(Comparative Example A22)

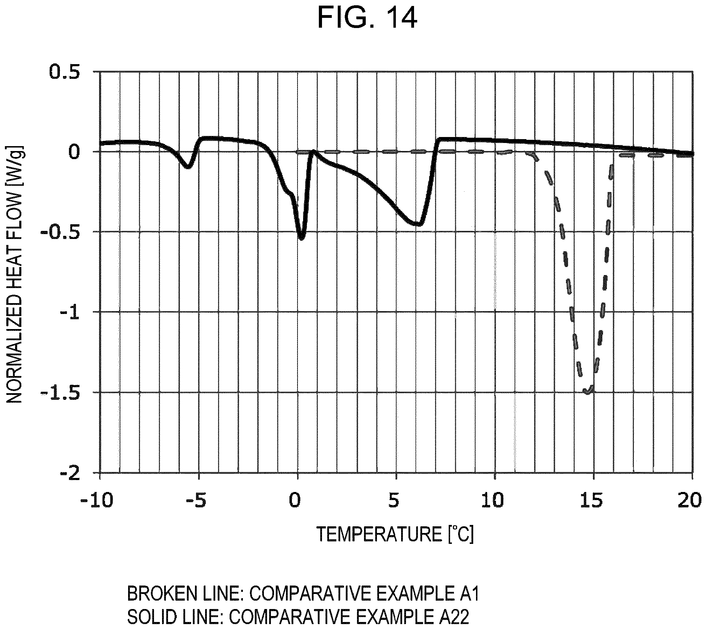

In Comparative Example A22, the same experiment as Example A4 was performed except that the weight ratio of tetra-n-butylammonium bromide to water was 30/70. Fig. 14 is a graph showing the comparison between the DSC measurement results of Comparative Example A22 and Comparative Example A1.

(Comparative Example A23)

In Comparative Example A23, the same experiment as Example A4 was performed except that the weight ratio of tetra-n-butylammonium bromide to water was 32.5/67.5.

(Comparative Example A24)

In Comparative Example A24, the same experiment as Example A4 was performed except that the weight ratio of tetra-n-butylammonium bromide to water was 35/65.

(Comparative Example A25)

In Comparative Example A25, the same experiment as Example A4 was performed except that the weight ratio of tetra-n-butylammonium bromide to water was 42.5/57.5.

(Comparative Example A26)

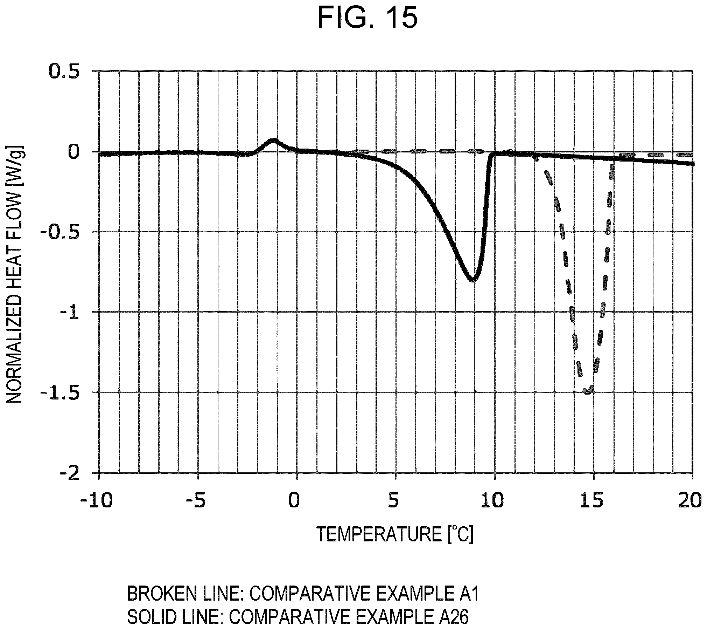

In Comparative Example A26, the same experiment as Example A4 was performed except that the weight ratio of tetra-n-butylammonium bromide to water was 45/55. Fig. 15 is a graph showing the comparison between the DSC measurement results of Comparative Example A26 and Comparative Example A1.

The following Tables 1 and 2 show the results of Examples A1 to A7 and Comparative Examples A1 to A26.

[Table 1]

| | Weight ratio of tetra-n-butylammonium bromide to water | Additive | Molar ratio of additive to water | Available fusion heat (J/g) |
|---|---|---|---|---|
| Example A1 | 40/60 | 1-Propanol | 0.043 | 135.2 |
| Example A2 | 40/60 | 1-Propanol | 0.045 | 148.7 |
| Example A3 | 40/60 | 1-Propanol | 0.047 | 143.7 |
| Example A4 | 40/60 | 1-Propanol | 0.052 | 145.2 |
| Example A5 | 40/60 | 1-Propanol | 0.06 | 141.7 |
| Example A6 | 40/60 | 1-Propanol | 0.065 | 144.1 |
| Example A7 | 37.5/62.5 | 1-Propanol | 0.052 | 146.3 |

[Table 2]

| | Weight ratio of tetra-n-butylammonium bromide to water | Additive | Molar ratio of additive to water | Available fusion heat (J/g) |
|---|---|---|---|---|
| Comparative Example A1 | 40/60 | (None) | - | 0.0 |
| Comparative Example A2 | 40/60 | Methanol | 0.052 | 73.1 |
| Comparative Example A3 | 40/60 | Ethanol | 0.052 | 101.9 |
| Comparative Example A4 | 40/60 | 2-Propanol | 0.052 | 105.6 |
| Comparative Example A5 | 40/60 | 1-Butanol | 0.052 | 123.0 |
| Comparative Example A6 | 40/60 | 2-Butanol | 0.052 | 117.6 |
| Comparative Example A7 | 40/60 | tert-Butyl alcohol | 0.052 | 96.6 |
| Comparative Example A8 | 40/60 | 1-Pentanol | 0.052 | 26.0 |
| Comparative Example A9 | 40/60 | 1-Hexanol | 0.052 | 10.5 |
| Comparative Example A10 | 40/60 | Ethylene glycol | 0.052 | 43.1 |

(continued)

| | Weight ratio of tetra-n-butylammonium bromide to water | Additive | Molar ratio of additive to water | Available fusion heat (J/g) |
|---|---|---|---|---|
| Comparative Example A11 | 40/60 | Glycerin | 0.052 | 40.7 |
| Comparative Example A12 | 40/60 | meso-Erythritol | 0.052 | 44.7 |
| Comparative Example A13 | 40/60 | Xylitol | 0.052 | 49.1 |
| Comparative Example A14 | 40/60 | 1-Propanol | 0.011 | 12.7 |
| Comparative Example A15 | 40/60 | 1-Propanol | 0.015 | 29.8 |
| Comparative Example A16 | 40/60 | 1-Propanol | 0.02 | 38.5 |
| Comparative Example A17 | 40/60 | 1-Propanol | 0.022 | 46.8 |
| Comparative Example A18 | 40/60 | 1-Propanol | 0.035 | 108.3 |
| Comparative Example A19 | 40/60 | 1-Propanol | 0.04 | 121.4 |
| Comparative Example A20 | 40/60 | 1-Propanol | 0.042 | 126.2 |
| Comparative Example A21 | 40/60 | 1-Propanol | 0.067 | 117.7 |
| Comparative Example A22 | 30/70 | 1-Propanol | 0.052 | 92.4 |
| Comparative Example A23 | 32.5/67.5 | 1-Propanol | 0.052 | 114.2 |
| Comparative Example A24 | 35/65 | 1-Propanol | 0.052 | 115.9 |
| Comparative Example A25 | 42.5/57.5 | 1-Propanol | 0.052 | 128.2 |
| Comparative Example A26 | 45/55 | 1-Propanol | 0.052 | 123.2 |

As obvious from the comparison of Examples A1 to A7 with Comparative Example A1, if 1-propanol is not contained in a cold storage material composition, as demonstrated in Comparative Example A1, the available fusion heat is equal to 0.

As obvious from the comparison of Examples A1 to A7 with Comparative Examples A2 to A13, if an alcohol other than 1-propanol is used, the available fusion heat is a value as low as less than or equal to 123.0 J/g.

As obvious from the comparison of Examples A1 to A7 with Comparative Examples A22 to A24, if the weight ratio of tetra-n-butylammonium bromide to water is less than or equal to 35/65 (i.e., about 0.54), the available fusion heat is a value as low as less than or equal to 115.9 J/g.

As obvious from the comparison of Examples A1 to A7 with Comparative Examples A25 and A26, if the weight ratio of tetra-n-butylammonium bromide to water is 42.5/57.5 (i.e., about 0.74), the available fusion heat is a value as low as less than or equal to 128.2 J/g.

As obvious from the comparison of Examples A1 to A7 with Comparative Examples A14 to A20, if the molar ratio of the additive to water is less than or equal to 0.042, the available fusion heat is a value as low as less than or equal to 126.2 J/g.

As obvious from the comparison of Examples A1 to A7 with Comparative Example A21, if the molar ratio of the additive to water is 0.067, the available fusion heat is a value as low as 111.7 J/g.

As demonstrated in Examples A1 to A7, when the additive is 1-propanol and the following two conditions (AI) and (AII) are satisfied, a cold storage material composition having a fusion heat of greater than or equal to 135 J/g within a range of higher than or equal to 2 degrees Celsius and lower than or equal to 8 degrees Celsius can be obtained.

Condition (AI): the weight ratio of tetra-n-butylammonium bromide to water is greater than or equal to 37.5/62.5 and less than or equal to 40/60; and

Condition (AII): the molar ratio of 1-propanol to water is greater than or equal to 0.043 and less than or equal to 0.065.

As obvious from Figs. 1 to 15, each of the cold storage material compositions of Examples A1 to A7 has a heat flow peak within a range of higher than or equal to 2 degrees Celsius and lower than or equal to 8 degrees Celsius. In contrast, the cold storage material composition of Comparative Example A1 has a heat flow peak at about 14.5 degrees Celsius.

(Example B1)

(Method for manufacturing heat storage material composition)

First, tetra-n-butylammonium bromide (40 g) and water (60 g) were mixed inside a screw tube having a capacity of 110 mL to obtain a mixture liquid. The screw tube was a glass tube with a screw lid.

Next, the mixture liquid (9.58 g) was taken out from the screw tube having a capacity of 110 mL and was then supplied to a screw tube having a capacity of 60 mL. Furthermore, 1-propanol (0.42 g, manufactured by FUJIFILM Wako Pure Chemical Corporation) was added to the screw tube having a capacity of 60 mL. 1-Propanol was used as an additive. Thus, a heat storage material composition according to Example B1 was obtained.

(Measurement experiment)

The heat storage material composition (2 mg) of Example B1 was supplied to a container (obtained from PerkinElmer Co., Ltd., trade name: 02192005). The container was incorporated in a differential scanning calorimeter (obtained from PerkinElmer Co., Ltd., trade name: DSC-8500). The cold storage material composition contained in the container was cooled from an ordinary temperature to -30 degrees Celsius at a rate of 1 degree Celsius/min and was then left to stand at -30 degrees Celsius for 5 minutes to crystallize the cold storage material.

The crystallized cold storage material composition was warmed from -30 degrees Celsius to 30 degrees Celsius at a rate of 1 degree Celsius/min. Thus, the crystallized cold storage material was melted.

During the warming of the crystallized cold storage material composition from -30 degrees Celsius to 30 degrees Celsius at a rate of 1 degree Celsius/min as described above, the differential scanning calorimeter output a heat flow (unit: W).

A normalized heat flow was calculated according to the following mathematical expression:

$$\text{(Normalized heat flow, unit: W/g)} = \text{(heat flow)/(weight of cold storage material, i.e., 2 mg)}.$$

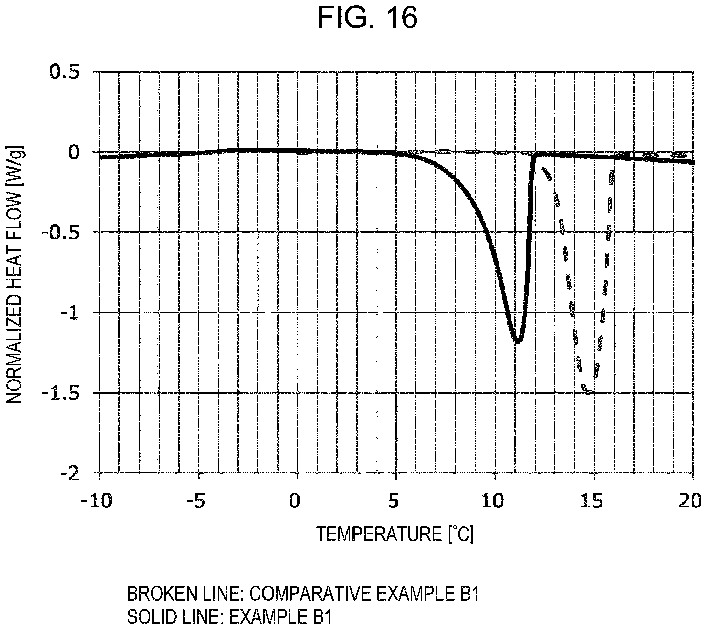

Fig. 16 is a graph showing the results of the thus-performed differential scanning calorimetry.

The integrated value of the differential scanning calories within a range of higher than or equal to 5 degrees Celsius and lower than or equal to 12 degrees Celsius in Fig. 16 was calculated as the available fusion heat within a range of higher than or equal to 5 degrees Celsius and lower than or equal to 12 degrees Celsius. See also Fig. 2 of NPL 1.

Consequently, the cold storage material composition of Example B1 had an available fusion heat of 145.0 J/g.

(Example B2)

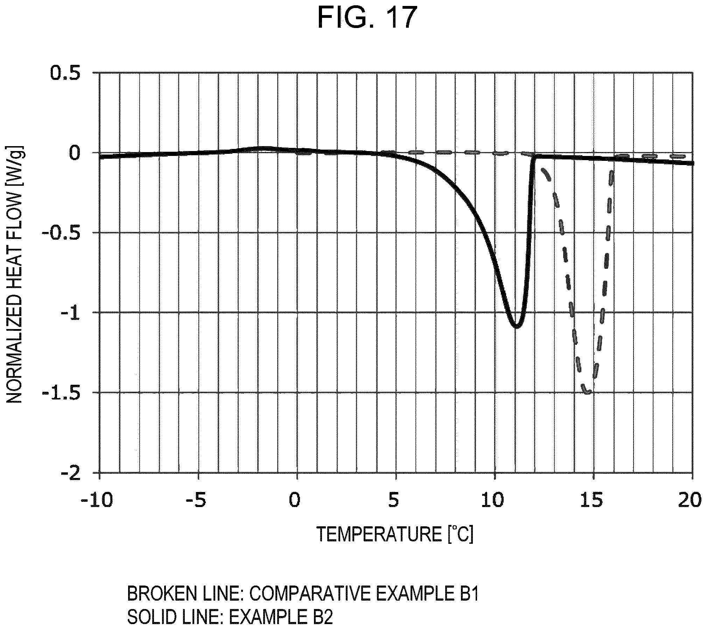

In Example B2, the same experiment as Example B1 was performed except that the molar ratio of the additive to water was 0.022. Fig. 17 is a graph showing the DSC measurement results in Example B2 and Comparative Example B1.

(Example B3)

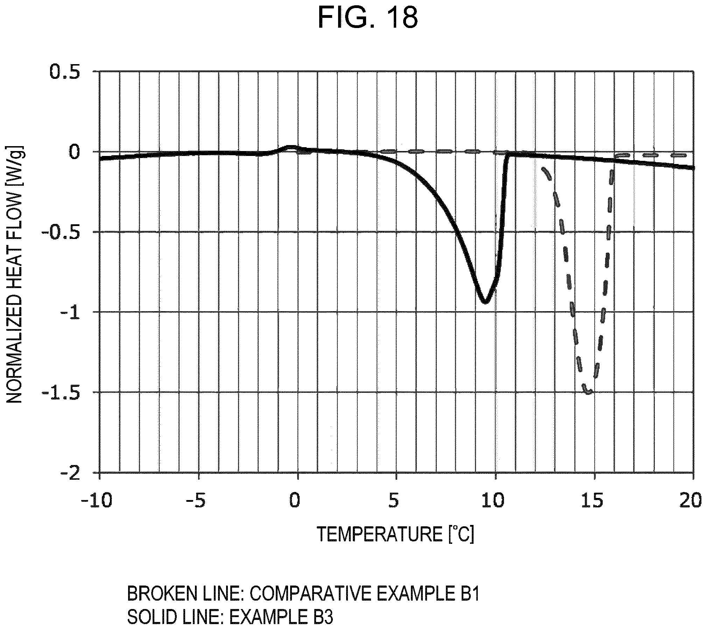

In Example B3, the same experiment as Example B1 was performed except that the molar ratio of the additive to water was 0.035. Fig. 18 is a graph showing the DSC measurement results in Example B3 and Comparative Example B1.

(Example B4)

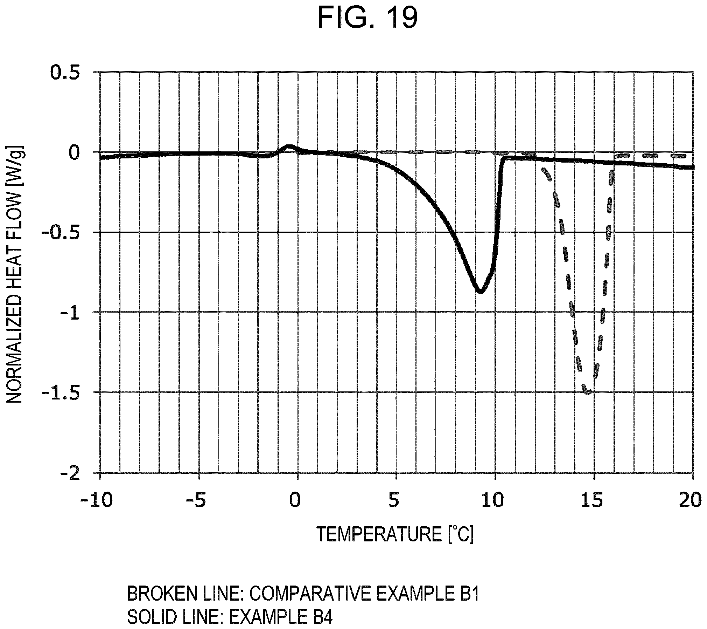

In Example B4, the same experiment as Example B1 was performed except that the molar ratio of the additive to water was 0.04. Fig. 19 is a graph showing the DSC measurement results in Example B4 and Comparative Example B1.

(Example B5)

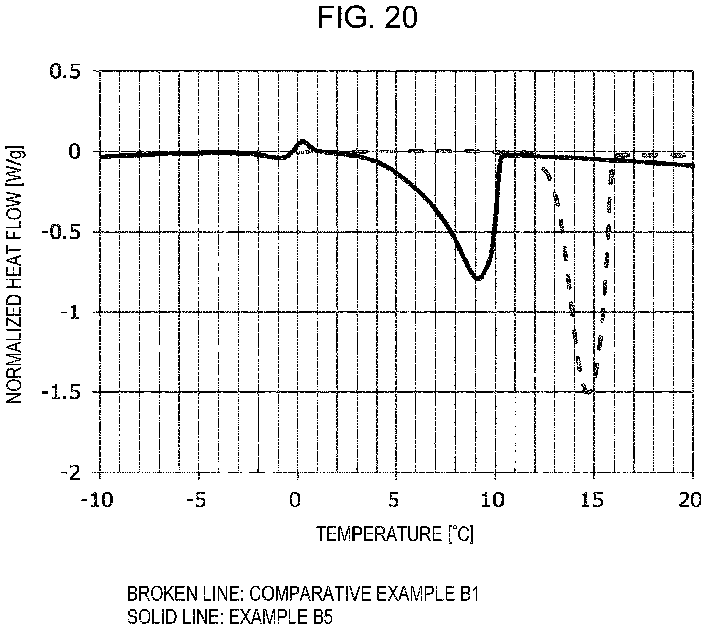

In Example B5, the same experiment as Example B1 was performed except that the molar ratio of the additive to water was 0.042. Fig. 20 is a graph showing the DSC measurement results in Example B5 and Comparative Example B1.

(Example B6)

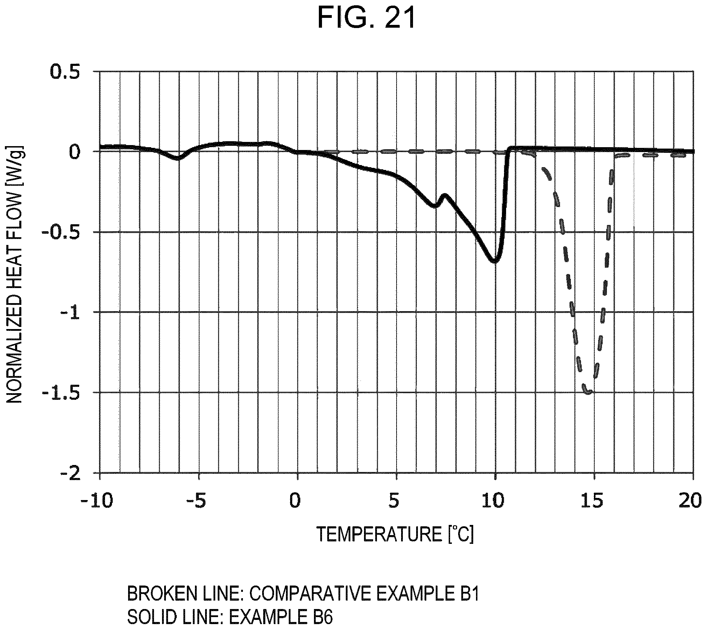

In Example B6, the same experiment as Example B2 was performed except that the weight ratio of tetra-n-butylammonium bromide to water was 32.5/67.5. Fig. 21 is a graph showing the DSC measurement results in Example B6 and Comparative Example B1.

(Example B7)

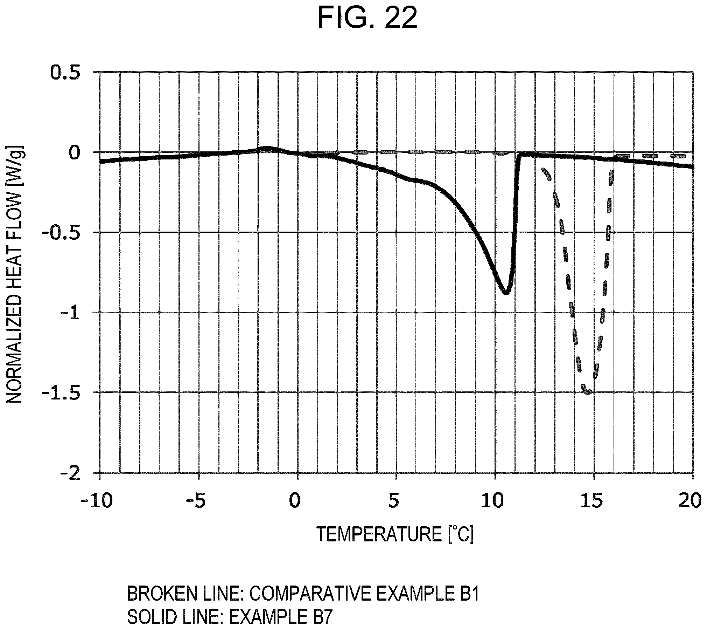

In Example B7, the same experiment as Example B2 was performed except that the weight ratio of tetra-n-butylammonium bromide to water was 35/65. Fig. 22 is a graph showing the DSC measurement results in Example B7 and Comparative Example B1.

(Example B8)

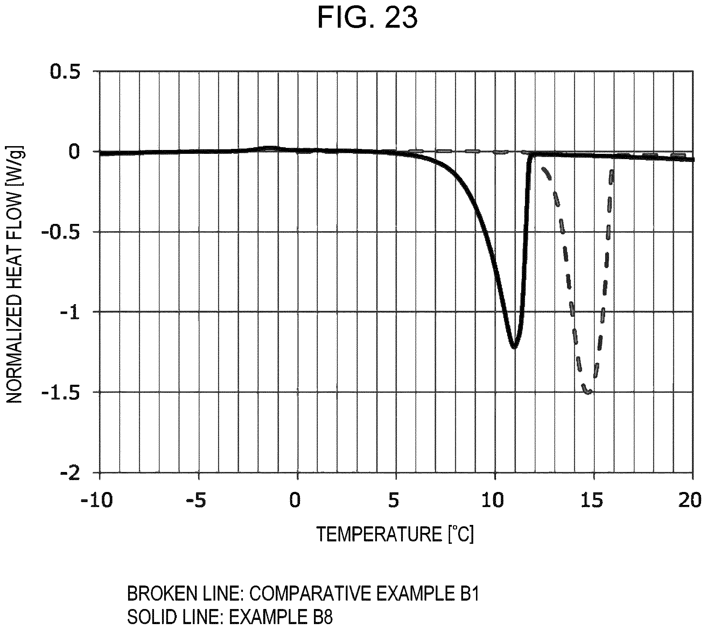

In Example B8, the same experiment as Example B2 was performed except that the weight ratio of tetra-n-butylammonium bromide to water was 42.5/57.5. Fig. 23 is a graph showing the DSC measurement results in Example B8 and Comparative Example B1.

(Example B9)

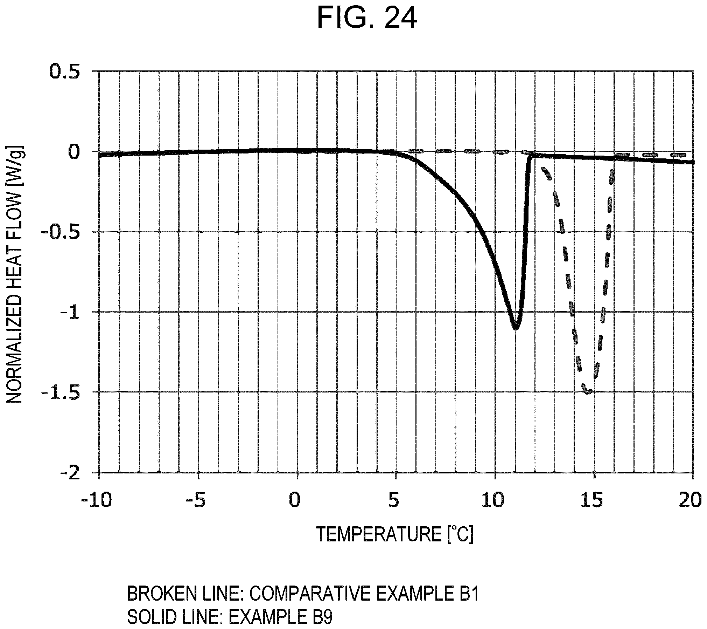

In Example B9, the same experiment as Example B1 was performed except that 1-butanol (manufactured by FUJIFILM Wako Pure Chemical Corporation) was used as the additive. Fig. 24 is a graph showing the DSC measurement results in Example B9 and Comparative Example B1.

(Example B10)

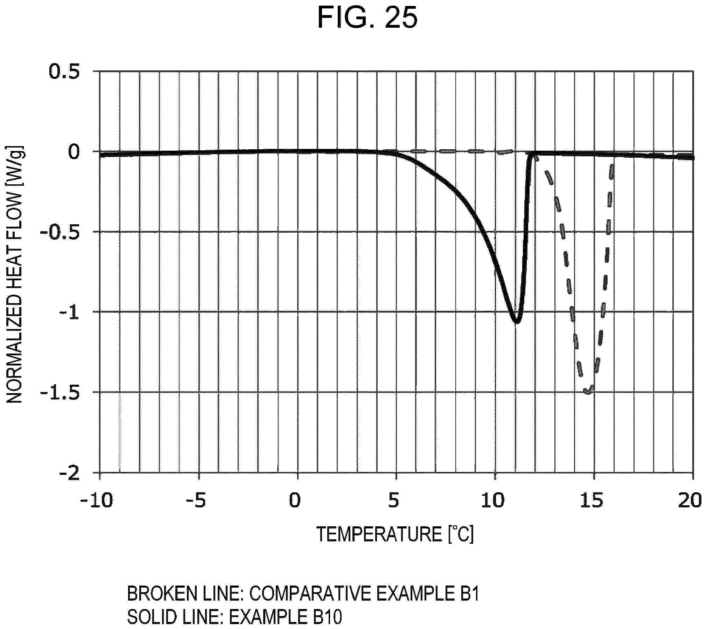

In Example B10, the same experiment as Example B9 was performed except that the molar ratio of the additive to water was 0.022. Fig. 25 is a graph showing the DSC measurement results in Example B10 and Comparative Example B1.

(Example B11)

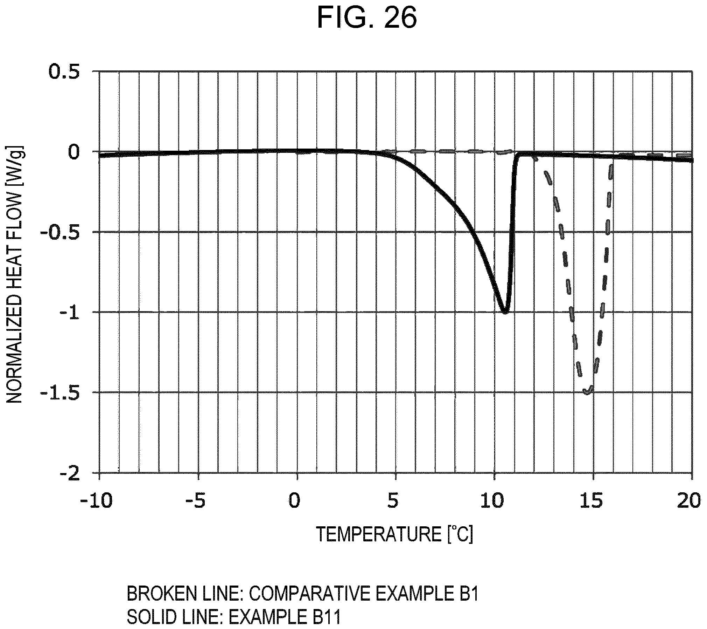

In Example B11, the same experiment as Example B9 was performed except that the molar ratio of the additive to water was 0.033. Fig. 26 is a graph showing the DSC measurement results in Example B11 and Comparative Example B1.

(Example B12)

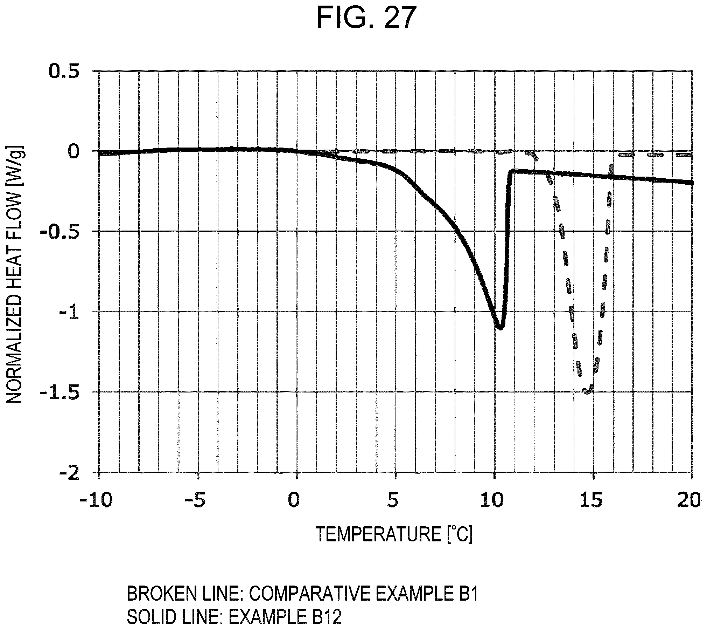

In Example B12, the same experiment as Example B9 was performed except that the molar ratio of the additive to water was 0.035. Fig. 27 is a graph showing the DSC measurement results in Example B12 and Comparative Example B1.

(Example B13)

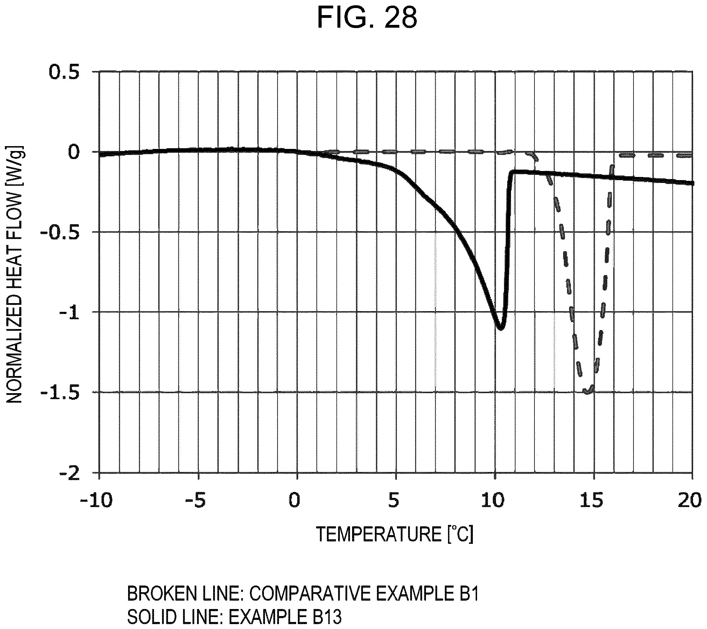

In Example B13, the same experiment as Example B10 was performed except that the weight ratio of tetra-n-butylammonium bromide to water was 30/70. Fig. 28 is a graph showing the DSC measurement results in Example B13 and Comparative Example B1.

(Example B14)

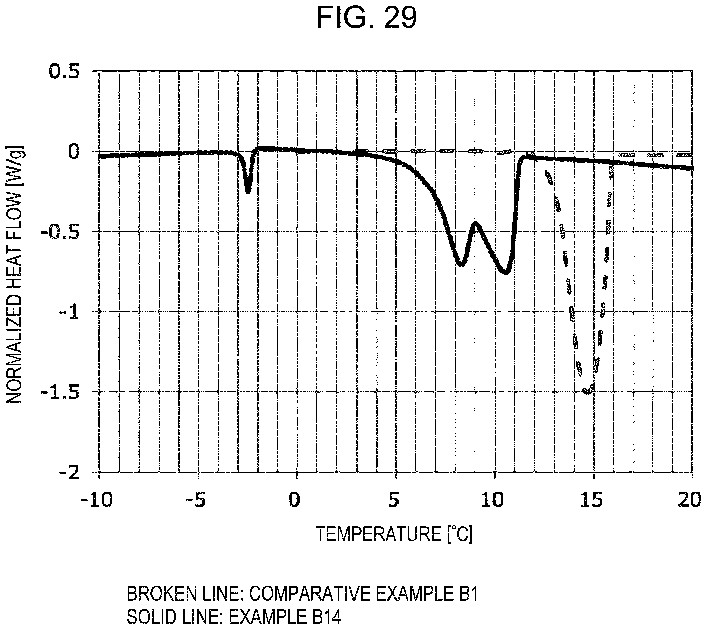

In Example B14, the same experiment as Example B10 was performed except that the weight ratio of tetra-n-butylammonium bromide to water was 35/65. Fig. 29 is a graph showing the DSC measurement results in Example B14 and Comparative Example B1.

(Example B15)

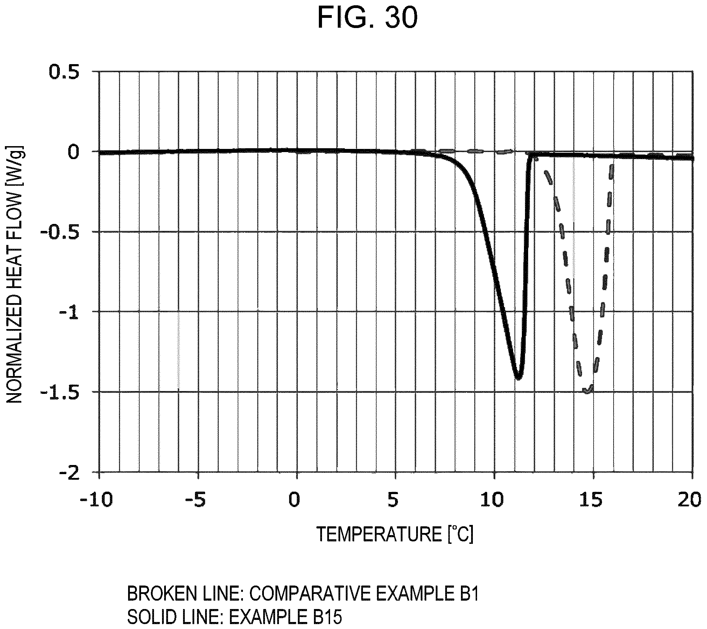

In Example B15, the same experiment as Example B10 was performed except that the weight ratio of tetra-n-butylammonium bromide to water was 42.5/57.5. Fig. 30 is a graph showing the DSC measurement results in Example B15 and Comparative Example B1.

(Comparative Example B1)

In Comparative Example B1, the same experiment as Example B1 was performed except that the additive was not added.

(Comparative Example B2)

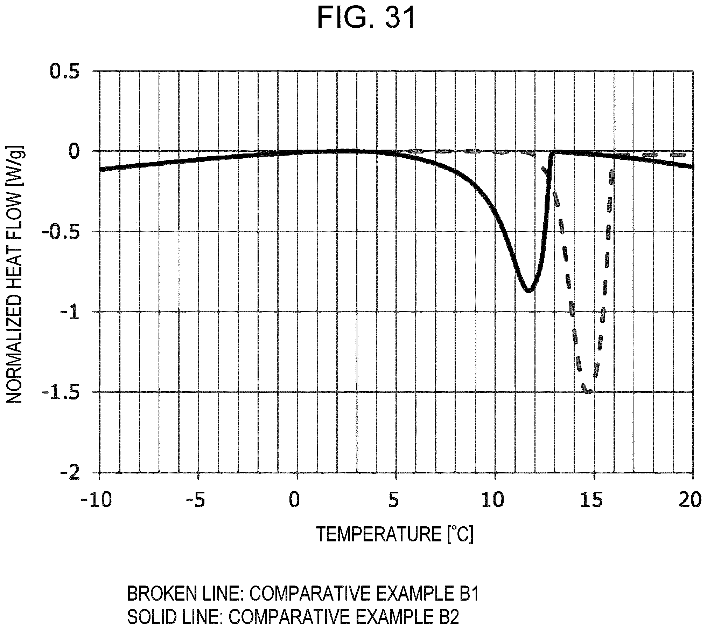

In Comparative Example B2, the same experiment as Example B2 was performed except that methanol (manufactured by FUJIFILM Wako Pure Chemical Corporation) was used as the additive. Fig. 31 is a graph showing the DSC measurement results in Comparative Example B2 and Comparative Example B1.

(Comparative Example B3)

In Comparative Example B3, the same experiment as Example B2 was performed except that ethanol (manufactured by FUJIFILM Wako Pure Chemical Corporation) was used as the additive.

(Comparative Example B4)

In Comparative Example B4, the same experiment as Example B2 was performed except that 2-propanol (manufactured by FUJIFILM Wako Pure Chemical Corporation) was used as the additive.

(Comparative Example B5)

In Comparative Example B5, the same experiment as Example B2 was performed except that 2-butanol (manufactured by FUJIFILM Wako Pure Chemical Corporation) was used as the additive.

(Comparative Example B6)

In Comparative Example B6, the same experiment as Example B2 was performed except that tert-butyl alcohol (manufactured by Tokyo Chemical Industry Co., Ltd.) was used as the additive.

(Comparative Example B7)

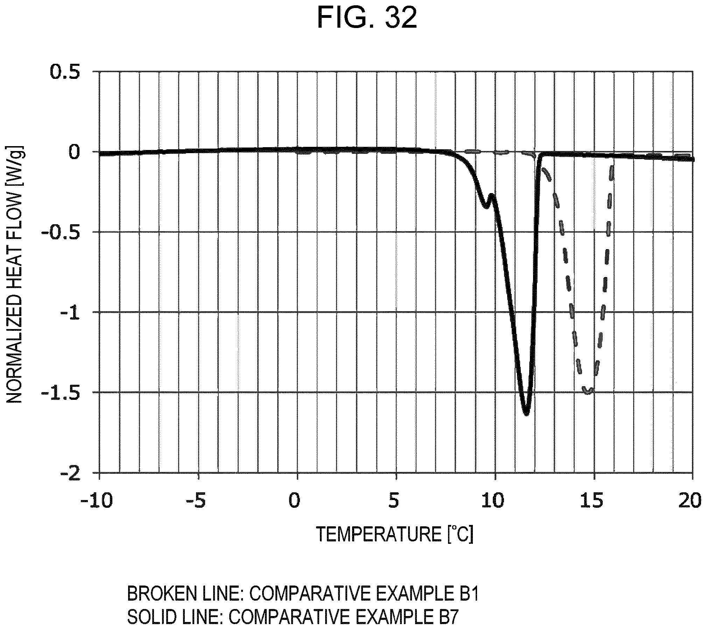

In Comparative Example B7, the same experiment as Example B2 was performed except that 1-pentanol (manufactured by FUJIFILM Wako Pure Chemical Corporation) was used as the additive. Fig. 32 is a graph showing the DSC measurement results in Comparative Example B7 and Comparative Example B1.

(Comparative Example B8)

In Comparative Example B8, the same experiment as Example B2 was performed except that 1-hexanol (manufactured by FUJIFILM Wako Pure Chemical Corporation) was used as the additive.

(Comparative Example B9)

In Comparative Example B9, the same experiment as Example B2 was performed except that ethylene glycol (manufactured by FUJIFILM Wako Pure Chemical Corporation) was used as the additive.

(Comparative Example B10)

In Comparative Example B10, the same experiment as Example B2 was performed except that 1,4-butanediol (manufactured by FUJIFILM Wako Pure Chemical Corporation) was used as the additive.

(Comparative Example B11)

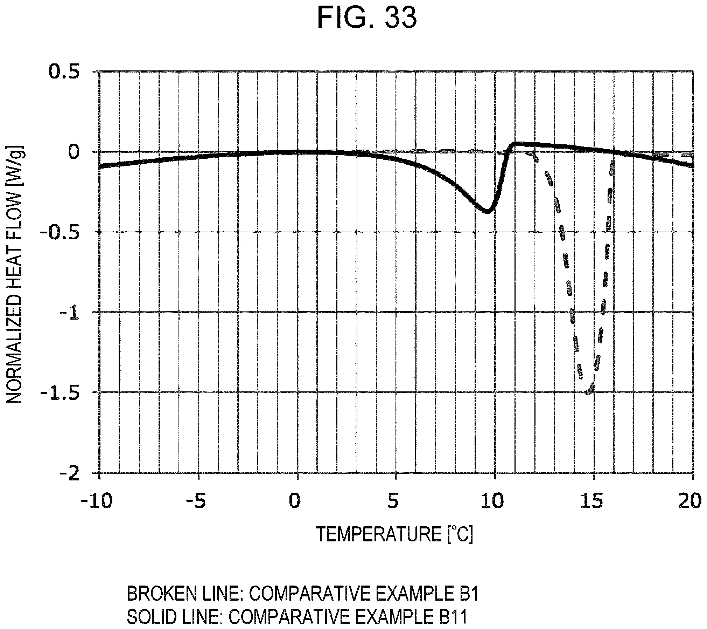

In Comparative Example B11, the same experiment as Example B2 was performed except that glycerin (manufactured by FUJIFILM Wako Pure Chemical Corporation) was used as the additive. Fig. 33 is a graph showing the DSC measurement results in Comparative Example B11 and Comparative Example B1.

(Comparative Example B12)

In Comparative Example B12, the same experiment as Example B2 was performed except that meso-erythritol (manufactured by Tokyo Chemical Industry Co., Ltd.) was used as the additive.

(Comparative Example B13)

In Comparative Example B13, the same experiment as Example B2 was performed except that xylitol (manufactured by FUJIFILM Wako Pure Chemical Corporation) was used as the additive.

(Comparative Example B14)

In Comparative Example B14, the same experiment as Example B1 was performed except that the molar ratio of the additive to water was 0.011.

(Comparative Example B15)

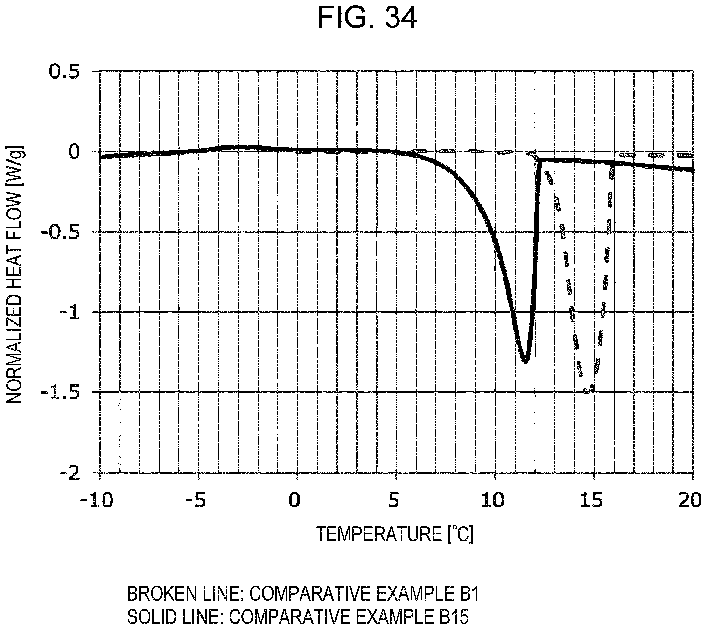

In Comparative Example B15, the same experiment as Example B1 was performed except that the molar ratio of the additive to water was 0.015. Fig. 34 is a graph showing the DSC measurement results in Comparative Example B15 and Comparative Example B1.

(Comparative Example B16)

In Comparative Example B16, the same experiment as Example B1 was performed except that the molar ratio of the additive to water was 0.043.

(Comparative Example B17)

In Comparative Example B17, the same experiment as Example B1 was performed except that the molar ratio of the additive to water was 0.045.

(Comparative Example B18)

In Comparative Example B18, the same experiment as Example B1 was performed except that the molar ratio of the additive to water was 0.047.

(Comparative Example B19)

In Comparative Example B19, the same experiment as Example B1 was performed except that the molar ratio of the additive to water was 0.052.

(Comparative Example B20)

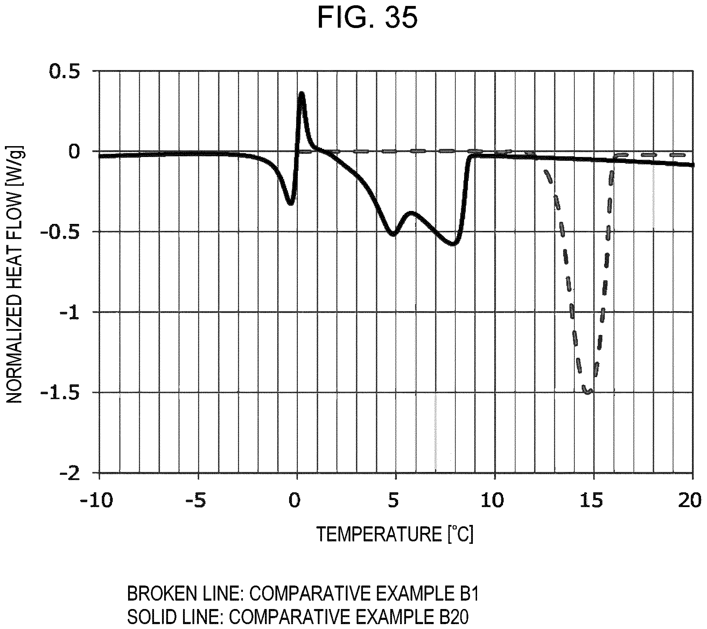

In Comparative Example B20, the same experiment as Example B1 was performed except that the molar ratio of the additive to water was 0.06. Fig. 35 is a graph showing the DSC measurement results in Comparative Example B20 and Comparative Example B1.

(Comparative Example B21)

In Comparative Example B21, the same experiment as Example B1 was performed except that the molar ratio of the additive to water was 0.065.

(Comparative Example B22)

In Comparative Example B22, the same experiment as Example B1 was performed except that the molar ratio of the additive to water was 0.067.

(Comparative Example B23)

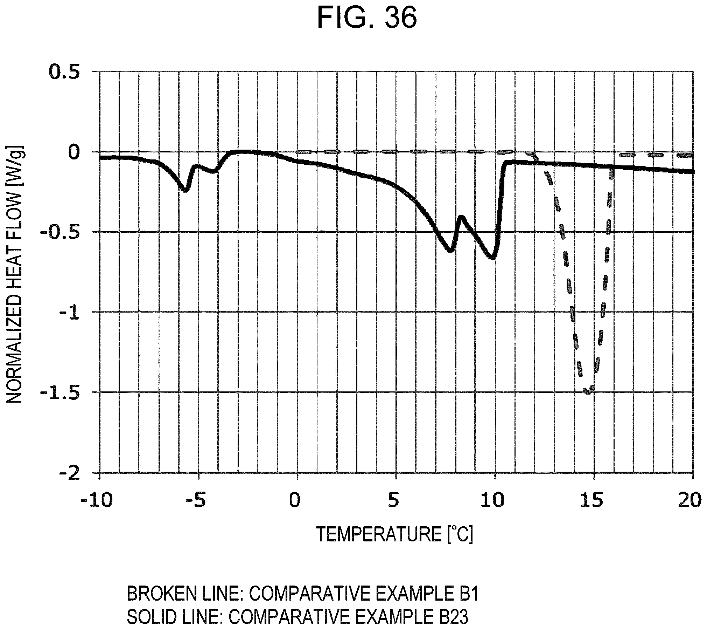

In Comparative Example B23, the same experiment as Example B2 was performed except that the weight ratio of tetra-n-butylammonium bromide to water was 30/70. Fig. 36 is a graph showing the DSC measurement results in Comparative Example B23 and Comparative Example B1.

(Comparative Example B24)

In Comparative Example B24, the same experiment as Example B2 was performed except that the weight ratio of tetra-n-butylammonium bromide to water was 45/55.

(Comparative Example B25)

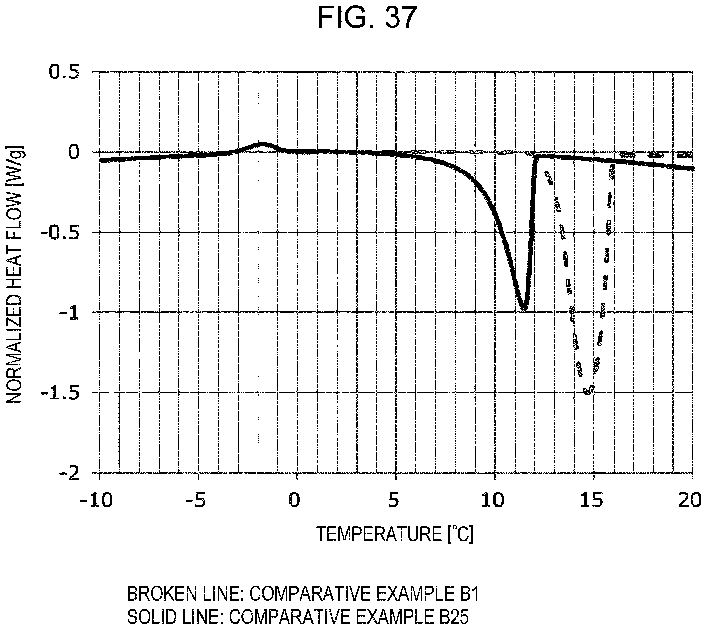

In Comparative Example B25, the same experiment as Example B2 was performed except that the weight ratio of tetra-n-butylammonium bromide to water was 50/50. Fig. 37 is a graph showing the DSC measurement results in Comparative Example B25 and Comparative Example B1.

(Comparative Example B26)

In Comparative Example B26, the same experiment as Example B9 was performed except that the molar ratio of the additive to water was 0.011.

(Comparative Example B27)

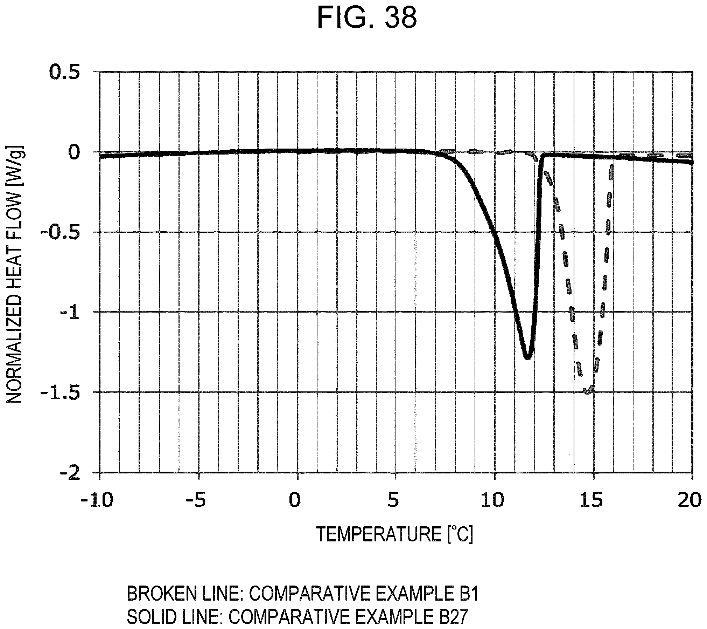

In Comparative Example B27, the same experiment as Example B9 was performed except that the molar ratio of the additive to water was 0.015. Fig. 38 is a graph showing the DSC measurement results in Comparative Example B27 and Comparative Example B1.

(Comparative Example B28)

In Comparative Example B28, the same experiment as Example B9 was performed except that the molar ratio of the additive to water was 0.04.

(Comparative Example B29)

In Comparative Example B29, the same experiment as Example B9 was performed except that the molar ratio of the additive to water was 0.043.

(Comparative Example B30)

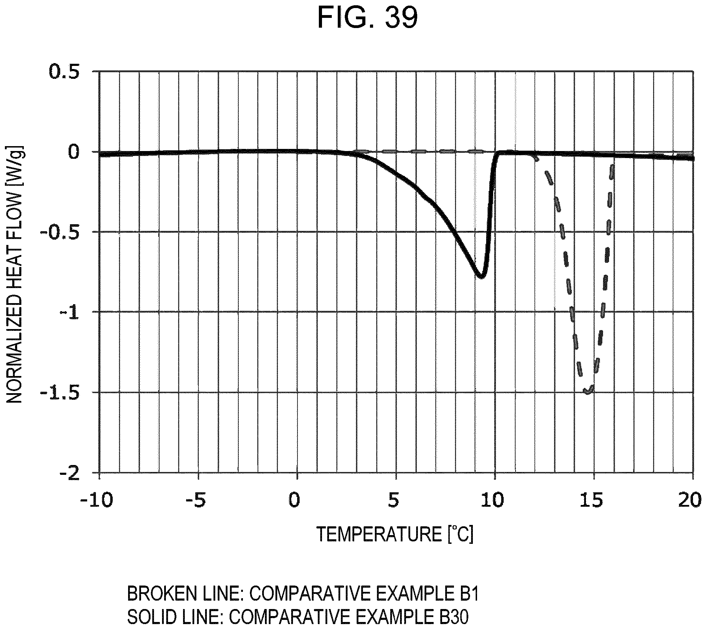

In Comparative Example B30, the same experiment as Example B9 was performed except that the molar ratio of the additive to water was 0.052. Fig. 39 is a graph showing the DSC measurement results in Comparative Example B30 and Comparative Example B1.

(Comparative Example B31)

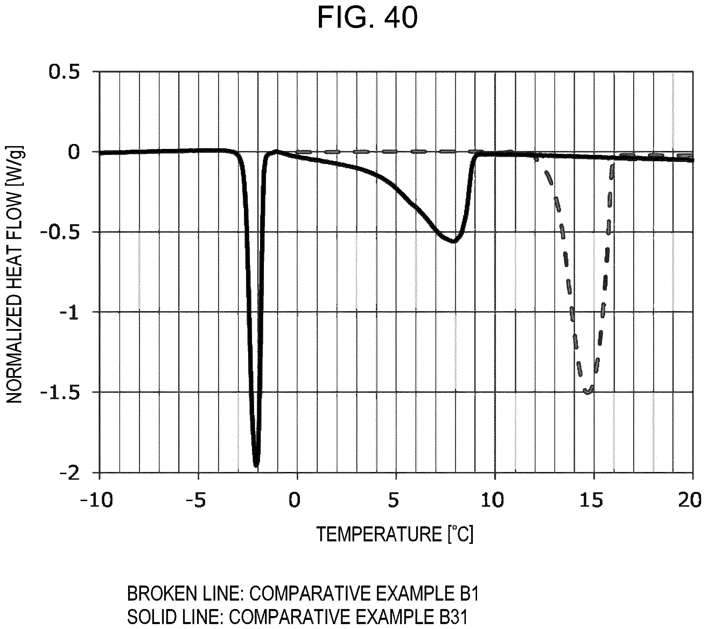

In Comparative Example B31, the same experiment as Example B10 was performed except that the weight ratio of tetra-n-butylammonium bromide to water was 22.5/77.5. Fig. 40 is a graph showing the DSC measurement results in Comparative Example B31 and Comparative Example B1.

(Comparative Example B32)

In Comparative Example B32, the same experiment as Example B10 was performed except that the weight ratio of tetra-n-butylammonium bromide to water was 25/75.

(Comparative Example B33)

In Comparative Example B33, the same experiment as Example B10 was performed except that the weight ratio of tetra-n-butylammonium bromide to water was 45/55.

(Comparative Example B34)

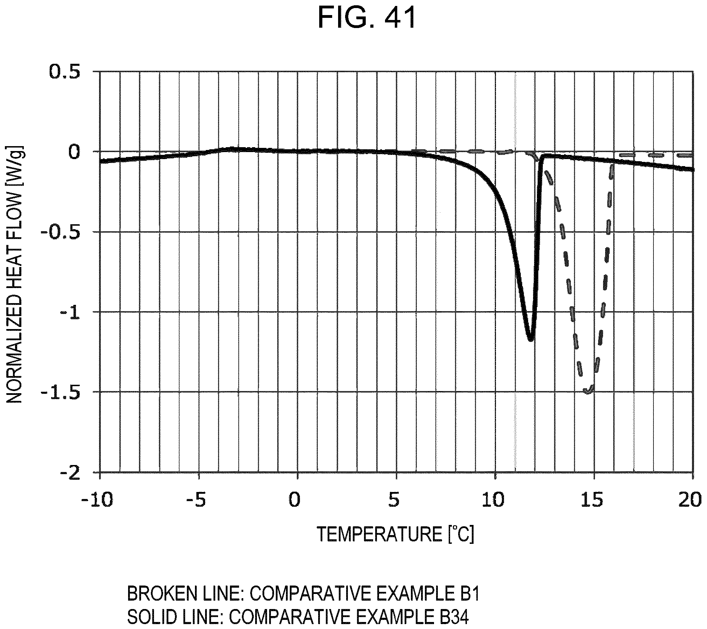

In Comparative Example B34, the same experiment as Example B10 was performed except that the weight ratio of tetra-n-butylammonium bromide to water was 50/50. Fig. 41 is a graph showing the DSC measurement results in Comparative Example B34 and Comparative Example B1.
The following Tables 3 and 4 show the results of Examples B1 to B15 and Comparative Examples B1 to B34.

[Table 3]

|  | Weight ratio of tetra-n-butylammonium bromide to water | Additive | Molar ratio of additive to water | Available fusion heat (J/g) |
|---|---|---|---|---|
| Example B1 | 40/60 | 1-Propanol | 0.02 | 145.0 |
| Example B2 | 40/60 | 1-Propanol | 0.022 | 149.3 |
| Example B3 | 40/60 | 1-Propanol | 0.035 | 143.4 |
| Example B4 | 40/60 | 1-Propanol | 0.04 | 140.9 |
| Example B5 | 40/60 | 1-Propanol | 0.042 | 137.9 |
| Example B6 | 32.5/67.5 | 1-Propanol | 0.022 | 136.2 |
| Example B7 | 35/65 | 1-Propanol | 0.022 | 144.5 |
| Example B8 | 42.5/57.5 | 1-Propanol | 0.022 | 142.2 |
| Example B9 | 40/60 | 1-Butanol | 0.02 | 152.4 |
| Example B10 | 40/60 | 1-Butanol | 0.022 | 152.1 |
| Example B11 | 40/60 | 1-Butanol | 0.033 | 142.9 |
| Example B12 | 40/60 | 1-Butanol | 0.035 | 147.1 |
| Example B13 | 30/70 | 1-Butanol | 0.022 | 148.2 |
| Example B14 | 35/65 | 1-Butanol | 0.022 | 150.9 |
| Example B15 | 42.5/57.5 | 1-Butanol | 0.022 | 143.5 |

[Table 4]

| | Weight ratio of tetra-n-butylammonium bromide to water | Additive | Molar ratio of additive to water | Available fusion heat (J/g) |
|---|---|---|---|---|
| Comparative Example B1 | 40/60 | (None) | - | 0.0 |
| Comparative Example B2 | 40/60 | Methanol | 0.022 | 95.7 |
| Comparative Example B3 | 40/60 | Ethanol | 0.022 | 130.0 |
| Comparative Example B4 | 40/60 | 2-Propanol | 0.022 | 134.7 |
| Comparative Example B5 | 40/60 | 2-Butanol | 0.022 | 123.8 |
| Comparative Example B6 | 40/60 | tert-Butyl alcohol | 0.022 | 49.5 |
| Comparative Example B7 | 40/60 | 1-Pentanol | 0.022 | 110.7 |
| Comparative Example B8 | 40/60 | 1-Hexanol | 0.022 | 31.5 |
| Comparative Example B9 | 40/60 | Ethylene glycol | 0.022 | 109.7 |
| Comparative Example B10 | 40/60 | 1,4-Butanediol | 0.022 | 107.3 |
| Comparative Example B11 | 40/60 | Glycerin | 0.022 | 66.7 |
| Comparative Example B12 | 40/60 | meso-Erythritol | 0.022 | 90.2 |
| Comparative Example B13 | 40/60 | Xylitol | 0.022 | 104.3 |
| Comparative Example B14 | 40/60 | 1-Propanol | 0.011 | 68.0 |
| Comparative Example B15 | 40/60 | 1-Propanol | 0.015 | 126.9 |
| Comparative Example B16 | 40/60 | 1-Propanol | 0.043 | 133.7 |
| Comparative Example B17 | 40/60 | 1-Propanol | 0.045 | 129.6 |
| Comparative Example B18 | 40/60 | 1-Propanol | 0.047 | 125.1 |
| Comparative Example B19 | 40/60 | 1-Propanol | 0.052 | 112.8 |
| Comparative Example B20 | 40/60 | 1-Propanol | 0.06 | 97.7 |
| Comparative Example B21 | 40/60 | 1-Propanol | 0.065 | 94.0 |

(continued)

| | Weight ratio of tetra-n-butylammonium bromide to water | Additive | Molar ratio of additive to water | Available fusion heat (J/g) |
|---|---|---|---|---|
| Comparative Example B22 | 40/60 | 1-Propanol | 0.067 | 91.9 |
| Comparative Example B23 | 30/70 | 1-Propanol | 0.022 | 130.1 |
| Comparative Example B24 | 45/55 | 1-Propanol | 0.022 | 124.4 |
| Comparative Example B25 | 50/50 | 1-Propanol | 0.022 | 90.4 |
| Comparative Example B26 | 40/60 | 1-Butanol | 0.011 | 82.4 |
| Comparative Example B27 | 40/60 | 1-Butanol | 0.015 | 109.3 |
| Comparative Example B28 | 40/60 | 1-Butanol | 0.04 | 132.7 |
| Comparative Example B29 | 40/60 | 1-Butanol | 0.043 | 132.8 |
| Comparative Example B30 | 40/60 | 1-Butanol | 0.052 | 124.3 |
| Comparative Example B31 | 22.5/77.5 | 1-Butanol | 0.022 | 92.2 |
| Comparative Example B32 | 25/75 | 1-Butanol | 0.022 | 116.0 |
| Comparative Example B33 | 45/55 | 1-Butanol | 0.022 | 117.5 |
| Comparative Example B34 | 50/50 | 1-Butanol | 0.022 | 67.4 |

As obvious from the comparison of Examples B1 to B15 with Comparative Example B1, if at least one selected from the group consisting of 1-propanol and 1-butanol is not contained in a cold storage material composition, as demonstrated in Comparative Example B1, the available fusion heat is equal to 0.

As obvious from the comparison of Examples B1 to B15 with Comparative Examples B2 to B13, if an alcohol other than at least one selected from the group consisting of 1-propanol and 1-butanol is used, the available fusion heat is a value as low as less than or equal to 134.7 J/g.

When the additive is 1-propanol, as obvious from the comparison of Examples B1 to B8 with Comparative Example B23, if the weight ratio of tetra-n-butylammonium bromide to water is 30/70 (i.e., about 0.43), the available fusion heat is a value as low as 130.1 J/g.

When the additive is 1-propanol, as obvious from the comparison of Examples B1 to B8 with Comparative Example B24, if the weight ratio of tetra-n-butylammonium bromide to water is 45/55 (i.e., about 0.82), the available fusion heat is a value as low as 124.4 J/g.

When the additive is 1-propanol, as obvious from the comparison of Examples B1 to B8 with Comparative Examples B14 and B15, if the molar ratio of the additive to water is less than or equal to 0.015, the available fusion heat is a value as low as less than or equal to 126.9 J/g.

When the additive is 1-propanol, as obvious from the comparison of Examples B1 to B8 with Comparative Examples B16 to B22, if the molar ratio of the additive to water is greater than or equal to 0.043, the available fusion heat is a value as low as less than or equal to 133.7 J/g.

As demonstrated in Examples B1 to B8, when the additive is 1-propanol and the following two conditions (Bi) and (ii) are satisfied, a cold storage material composition having a fusion heat of greater than or equal to 135 J/g within a range of higher than or equal to 5 degrees Celsius and lower than or equal to 12 degrees Celsius can be obtained.

Condition (Bi): the weight ratio of tetra-n-butylammonium bromide to water is greater than or equal to 32.5/67.5 and less than or equal to 42.5/57.5; and
Condition (Bii): the molar ratio of 1-propanol to water is greater than or equal to 0.02 and less than or equal to 0.042.

When the additive is 1-butanol, as obvious from the comparison of Examples B9 to B15 with Comparative Examples B31 and B32, if the weight ratio of tetra-n-butylammonium bromide to water is less than or equal to 25/75 (i.e., about 0.33), the available fusion heat is a value as low as less than or equal to 116.0 J/g.

When the additive is 1-butanol, as obvious from the comparison of Examples B9 to B15 with Comparative Examples B33 and B34, if the weight ratio of tetra-n-butylammonium bromide to water is greater than or equal to 45/55 (i.e., about 0.82), the available fusion heat is a value as low as less than or equal to 117.5 J/g.

When the additive is 1-butanol, as obvious from the comparison of Examples B9 to B15 with Comparative Examples B26 and B27, if the molar ratio of the additive to water is less than or equal to 0.015, the available fusion heat is a value as low as less than or equal to 109.3 J/g.

When the additive is 1-butanol, as obvious from the comparison of Examples B9 to B15 with Comparative Examples B28 to B30, if the molar ratio of the additive to water is greater than or equal to 0.040, the available fusion heat is a value as low as less than or equal to 132.8 J/g.

As demonstrated in Examples B9 to B15, when the additive is 1-butanol and the following two conditions (Biii) and (iv) are satisfied, a cold storage material composition having a fusion heat of greater than or equal to 135 J/g within a range of higher than or equal to 5 degrees Celsius and lower than or equal to 12 degrees Celsius can be obtained.

Condition (Biii): the weight ratio of tetra-n-butylammonium bromide to water is greater than or equal to 30/70 and less than or equal to 42.5/57.5; and
Condition (Biv): the molar ratio of 1-butanol to water is greater than or equal to 0.02 and less than or equal to 0.035.

As obvious from Figs. 16 to 41, each of the cold storage material compositions of Examples B1 to B15 has a heat flow peak within a range of higher than or equal to 5 degrees Celsius and lower than or equal to 12 degrees Celsius. In contrast, the cold storage material composition of Comparative Example B1 has a heat flow peak at about 14.5 degrees Celsius.

Industrial Applicability

The cold storage material composition according to the first aspect of the present invention can be included in a refrigerator or a cold-storage warehouse, the internal temperature of which is maintained at higher than or equal to 2 degrees Celsius and lower than or equal to 8 degrees Celsius.

The cold storage material composition according to the second aspect of the present invention can be included in a refrigerator or a cold-storage warehouse, the internal temperature of which is maintained at higher than or equal to 5 degrees Celsius and lower than or equal to 12 degrees Celsius. The cold storage material composition according to the third aspect of the present invention can also be included in a refrigerator or a cold-storage warehouse, the internal temperature of which is maintained at higher than or equal to 5 degrees Celsius and lower than or equal to 12 degrees Celsius.

**Claims**

1. A cold storage material composition comprising:

   tetra-n-butylammonium bromide;
   water; and
   1-propanol, wherein
   a weight ratio of the tetra-n-butylammonium bromide to the water is greater than or equal to 37.5/62.5 and less than or equal to 40/60;
   a molar ratio of the 1-propanol to the water is greater than or equal to 0.043 and less than or equal to 0.065;
   the cold storage material composition has a fusion heat of greater than or equal to 135 J/g within a range of higher than or equal to 2 degrees Celsius and lower than or equal to 8 degrees Celsius; and
   the cold storage material composition has a heat flow peak within a range of higher than or equal to 2 degrees Celsius and lower than or equal to 8 degrees Celsius.

**2.** A refrigerator including the cold storage material composition according to Claim 1.

**3.** A cold-storage warehouse including the cold storage material composition according to Claim 1.

**4.** A cold storage material composition comprising:

tetra-n-butylammonium bromide;
water; and
1-propanol, wherein
a weight ratio of the tetra-n-butylammonium bromide to the water is greater than or equal to 32.5/67.5 and less than or equal to 42.5/57.5;
a molar ratio of the 1-propanol to the water is greater than or equal to 0.02 and less than or equal to 0.042;
the cold storage material composition has a fusion heat of greater than or equal to 135 J/g within a range of higher than or equal to 5 degrees Celsius and lower than or equal to 12 degrees Celsius; and
the cold storage material composition has a heat flow peak within a range of higher than or equal to 5 degrees Celsius and lower than or equal to 12 degrees Celsius.

**5.** A refrigerator including the cold storage material composition according to Claim 4.

**6.** A cold-storage warehouse including the cold storage material composition according to Claim 4.

**7.** A cold storage material composition comprising:

tetra-n-butylammonium bromide;
water; and
1-butanol, wherein
a weight ratio of the tetra-n-butylammonium bromide to the water is greater than or equal to 30/70 and less than or equal to 42.5/57.5;
a molar ratio of the 1-butanol to the water is greater than or equal to 0.02 and less than or equal to 0.035;
the cold storage material composition has a fusion heat of greater than or equal to 135 J/g within a range of higher than or equal to 5 degrees Celsius and lower than or equal to 12 degrees Celsius; and
the cold storage material composition has a heat flow peak within a range of higher than or equal to 5 degrees Celsius and lower than or equal to 12 degrees Celsius.

**8.** A refrigerator including the cold storage material composition according to Claim 7.

**9.** A cold-storage warehouse including the cold storage material composition according to Claim 7.

**Patentansprüche**

**1.** Kältespeichermaterialzusammensetzung, umfassend:

Tetra-n-Butylammoniumbromid;
Wasser; und
1-Propanol, wobei
ein Gewichtsverhältnis von Tetra-n-Butylammoniumbromid zu Wasser größer oder gleich 37,5/62,5 und kleiner oder gleich 40/60 ist;
ein molares Verhältnis von 1-Propanol zu Wasser größer oder gleich 0,043 und kleiner oder gleich 0,065 ist;
die Kältespeichermaterialzusammensetzung eine Schmelzwärme von mehr als oder gleich 135 J/g in einem Bereich von mehr als oder gleich 2 Grad Celsius und weniger als oder gleich 8 Grad Celsius aufweist; und
die Kältespeichermaterialzusammensetzung einen Wärmestromspitzenwert in einem Bereich von 2 Grad Celsius oder mehr und 8 Grad Celsius oder weniger aufweist.

**2.** Kühlschrank, der die Kältespeichermaterialzusammensetzung nach Anspruch 1 enthält.

**3.** Kühlhaus, das die Kühlmaterialzusammensetzung nach Anspruch 1 enthält.

**4.** Kältespeichermaterialzusammensetzung, umfassend:

Tetra-n-Butylammoniumbromid;
Wasser; und
1-Propanol, wobei
ein Gewichtsverhältnis von Tetra-n-Butylammoniumbromid zu Wasser größer oder gleich 32,5/67,5 und kleiner oder gleich 42,5/57,5 ist;
ein molares Verhältnis von 1-Propanol zu Wasser größer oder gleich 0,02 und kleiner oder gleich 0,042 ist;
die Kältespeichermaterialzusammensetzung eine Schmelzwärme von mehr als oder gleich 135 J/g in einem Bereich von mehr als oder gleich 5 Grad Celsius und weniger als oder gleich 12 Grad Celsius aufweist; und
die Kältespeichermaterialzusammensetzung eine Wärmestromspitze in einem Bereich von 5 Grad Celsius oder mehr und 12 Grad Celsius oder weniger aufweist.

**5.** Kühlschrank, der die Kältespeichermaterialzusammensetzung nach Anspruch 4 enthält.

**6.** Kühlhaus, das die Kühlmaterialzusammensetzung nach Anspruch 4 enthält.

**7.** Kältespeichermaterialzusammensetzung, umfassend:

Tetra-n-Butylammoniumbromid;
Wasser; und
1-Butanol, wobei
ein Gewichtsverhältnis von Tetra-n-Butylammoniumbromid zu Wasser größer oder gleich 30/70 und kleiner oder gleich 42,5/57,5 ist;
das molare Verhältnis von 1-Butanol zu Wasser größer oder gleich 0,02 und kleiner oder gleich 0,035 ist;
die Kältespeichermaterialzusammensetzung eine Schmelzwärme von mehr als oder gleich 135 J/g in einem Bereich von mehr als oder gleich 5 Grad Celsius und weniger als oder gleich 12 Grad Celsius aufweist; und
die Kältespeichermaterialzusammensetzung eine Wärmestromspitze in einem Bereich von 5 Grad Celsius oder mehr und 12 Grad Celsius oder weniger aufweist.

**8.** Kühlschrank, der die Kältespeichermaterialzusammensetzung nach Anspruch 7 enthält.

**9.** Kühlhaus, das die Kühlmaterialzusammensetzung nach Anspruch 7 enthält.

**Revendications**

**1.** Composition de matériau de stockage frigorifique comprenant :

bromure de tétra-*n*-butylammonium ;
eau ; et
1-propanol, dans laquelle
un rapport massique du bromure de tétra-n-butylammonium à l'eau est supérieur ou égal à 37,5/62,5 et inférieur ou égal à 40/60 ;
un rapport molaire du 1-propanol à l'eau est supérieur ou égal à 0,043 et inférieur ou égal à 0,065 ;
la composition de matériau de stockage frigorifique a une chaleur de fusion supérieure ou égale à 135 J/g à l'intérieur d'une plage supérieure ou égale à 2 degrés Celsius et inférieure ou égale à 8 degrés Celsius ; et
la composition de matériau de stockage frigorifique a un pic de flux thermique à l'intérieur d'une plage supérieure ou égale à 2 degrés Celsius et inférieure ou égale à 8 degrés Celsius.

**2.** Réfrigérateur comportant la composition de matériau de stockage frigorifique selon la revendication 1.

**3.** Entrepôt de stockage frigorifique comportant la composition de matériau de stockage frigorifique selon la revendication 1.

**4.** Composition de matériau de stockage frigorifique comprenant :

bromure de tétra-n-butylammonium ;

eau ; et

1-propanol, dans laquelle

un rapport massique du bromure de tétra-n-butylammonium à l'eau est supérieur ou égal à 32,5/67,5 et inférieur ou égal à 42,5/57,5 ;

un rapport molaire du 1-propanol à l'eau est supérieur ou égal à 0,02 et inférieur ou égal à 0,042 ;

la composition de matériau de stockage frigorifique a une chaleur de fusion supérieure ou égale à 135 J/g à l'intérieur d'une plage supérieure ou égale à 5 degrés Celsius et inférieure ou égale à 12 degrés Celsius ; et

la composition de matériau de stockage frigorifique a un pic de flux thermique à l'intérieur d'une plage supérieure ou égale à 5 degrés Celsius et inférieure ou égale à 12 degrés Celsius.

5. Réfrigérateur comportant la composition de matériau de stockage frigorifique selon la revendication 4.

6. Entrepôt de stockage frigorifique comportant la composition de matériau de stockage frigorifique selon la revendication 4.

7. Composition de matériau de stockage frigorifique comprenant :

bromure de tétra-n-butylammonium ;

eau ; et

1-butanol, dans laquelle

un rapport massique du bromure de tétra-n-butylammonium à l'eau est supérieur ou égal à 30/70 et inférieur ou égal à 42,5/57,5 ;

un rapport molaire du 1-butanol à l'eau est supérieur ou égal à 0,02 et inférieur ou égal à 0,035 ;

la composition de matériau de stockage frigorifique a une chaleur de fusion supérieure ou égale à 135 J/g à l'intérieur d'une plage supérieure ou égale à 5 degrés Celsius et inférieure ou égale à 12 degrés Celsius ; et

la composition de matériau de stockage frigorifique a un pic de flux thermique à l'intérieur d'une plage supérieure ou égale à 5 degrés Celsius et inférieure ou égale à 12 degrés Celsius.

8. Réfrigérateur comportant la composition de matériau de stockage frigorifique selon la revendication 7.

9. Entrepôt de stockage frigorifique comportant la composition de matériau de stockage frigorifique selon la revendication 7.

## FIG. 1

BROKEN LINE: COMPARATIVE EXAMPLE A1
SOLID LINE: EXAMPLE A1

## FIG. 2

BROKEN LINE: COMPARATIVE EXAMPLE A1
SOLID LINE: EXAMPLE A2

FIG. 3

FIG. 4

BROKEN LINE: COMPARATIVE EXAMPLE A1
SOLID LINE: EXAMPLE A4

FIG. 5

BROKEN LINE: COMPARATIVE EXAMPLE A1
SOLID LINE: EXAMPLE A5

FIG. 6

BROKEN LINE: COMPARATIVE EXAMPLE A1
SOLID LINE: EXAMPLE A6

## FIG. 7

BROKEN LINE: COMPARATIVE EXAMPLE A1
SOLID LINE: EXAMPLE A7

## FIG. 8

BROKEN LINE: COMPARATIVE EXAMPLE A1
SOLID LINE: COMPARATIVE EXAMPLE A3

FIG. 9

BROKEN LINE: COMPARATIVE EXAMPLE A1
SOLID LINE: COMPARATIVE EXAMPLE A7

EP 3 943 572 B1

## FIG. 10

BROKEN LINE: COMPARATIVE EXAMPLE A1
SOLID LINE: COMPARATIVE EXAMPLE A9

FIG. 11

TEMPERATURE [°C]

NORMALIZED HEAT FLOW [W/g]

BROKEN LINE: COMPARATIVE EXAMPLE A1
SOLID LINE: COMPARATIVE EXAMPLE A10

FIG. 12

BROKEN LINE: COMPARATIVE EXAMPLE A1
SOLID LINE: COMPARATIVE EXAMPLE A18

EP 3 943 572 B1

FIG. 13

BROKEN LINE: COMPARATIVE EXAMPLE A1
SOLID LINE: COMPARATIVE EXAMPLE A21

EP 3 943 572 B1

FIG. 14

NORMALIZED HEAT FLOW [W/g]

TEMPERATURE [°C]

BROKEN LINE: COMPARATIVE EXAMPLE A1
SOLID LINE: COMPARATIVE EXAMPLE A22

FIG. 15

NORMALIZED HEAT FLOW [W/g]

TEMPERATURE [°C]

BROKEN LINE: COMPARATIVE EXAMPLE A1
SOLID LINE: COMPARATIVE EXAMPLE A26

# FIG. 16

BROKEN LINE: COMPARATIVE EXAMPLE B1
SOLID LINE: EXAMPLE B1

EP 3 943 572 B1

FIG. 17

BROKEN LINE: COMPARATIVE EXAMPLE B1
SOLID LINE: EXAMPLE B2

EP 3 943 572 B1

FIG. 18

BROKEN LINE: COMPARATIVE EXAMPLE B1
SOLID LINE: EXAMPLE B3

# FIG. 19

BROKEN LINE: COMPARATIVE EXAMPLE B1
SOLID LINE: EXAMPLE B4

EP 3 943 572 B1

# FIG. 20

BROKEN LINE: COMPARATIVE EXAMPLE B1
SOLID LINE: EXAMPLE B5

EP 3 943 572 B1

## FIG. 21

BROKEN LINE: COMPARATIVE EXAMPLE B1
SOLID LINE: EXAMPLE B6

FIG. 22

BROKEN LINE: COMPARATIVE EXAMPLE B1
SOLID LINE: EXAMPLE B7

FIG. 23

NORMALIZED HEAT FLOW [W/g]

0.5  0  -0.5  -1  -1.5  -2

-10  -5  0  5  10  15  20

TEMPERATURE [°C]

BROKEN LINE: COMPARATIVE EXAMPLE B1
SOLID LINE: EXAMPLE B8

# FIG. 24

BROKEN LINE: COMPARATIVE EXAMPLE B1
SOLID LINE: EXAMPLE B9

FIG. 25

BROKEN LINE: COMPARATIVE EXAMPLE B1
SOLID LINE: EXAMPLE B10

FIG. 26

FIG. 27

BROKEN LINE: COMPARATIVE EXAMPLE B1
SOLID LINE: EXAMPLE B12

FIG. 28

BROKEN LINE: COMPARATIVE EXAMPLE B1
SOLID LINE: EXAMPLE B13

EP 3 943 572 B1

## FIG. 29

BROKEN LINE: COMPARATIVE EXAMPLE B1
SOLID LINE: EXAMPLE B14

FIG. 30

BROKEN LINE: COMPARATIVE EXAMPLE B1
SOLID LINE: EXAMPLE B15

FIG. 31

BROKEN LINE: COMPARATIVE EXAMPLE B1
SOLID LINE: COMPARATIVE EXAMPLE B2

# FIG. 32

BROKEN LINE: COMPARATIVE EXAMPLE B1
SOLID LINE: COMPARATIVE EXAMPLE B7

EP 3 943 572 B1

FIG. 33

BROKEN LINE: COMPARATIVE EXAMPLE B1
SOLID LINE: COMPARATIVE EXAMPLE B11

EP 3 943 572 B1

## FIG. 34

BROKEN LINE: COMPARATIVE EXAMPLE B1
SOLID LINE: COMPARATIVE EXAMPLE B15

EP 3 943 572 B1

FIG. 35

BROKEN LINE: COMPARATIVE EXAMPLE B1
SOLID LINE: COMPARATIVE EXAMPLE B20

FIG. 36

BROKEN LINE: COMPARATIVE EXAMPLE B1
SOLID LINE: COMPARATIVE EXAMPLE B23

FIG. 37

TEMPERATURE [°C]

NORMALIZED HEAT FLOW [W/g]

BROKEN LINE: COMPARATIVE EXAMPLE B1
SOLID LINE: COMPARATIVE EXAMPLE B25

# FIG. 38

BROKEN LINE: COMPARATIVE EXAMPLE B1
SOLID LINE: COMPARATIVE EXAMPLE B27

EP 3 943 572 B1

FIG. 39

BROKEN LINE: COMPARATIVE EXAMPLE B1
SOLID LINE: COMPARATIVE EXAMPLE B30

FIG. 40

BROKEN LINE: COMPARATIVE EXAMPLE B1
SOLID LINE: COMPARATIVE EXAMPLE B31

FIG. 41

BROKEN LINE: COMPARATIVE EXAMPLE B1
SOLID LINE: COMPARATIVE EXAMPLE B34

FIG. 42

FIG. 43

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017179299 A
- JP 2007163045 A
- JP 2010018879 A
- JP 6226488 B
- JP 4839903 B

**Non-patent literature cited in the description**

- **MOHAMED RADY.** A Comparative Study of Phase Changing Characteristics of Granular Phase Change Materials Using DSC and T-History Methods. *Tech. Science Press FDMP,* 2010, vol. 6 (2), 137-152